(19) Europäisches Patentamt
European Patent Office
Office européen des brevets

(11) **EP 4 080 351 A1**

(12) **EUROPEAN PATENT APPLICATION**
published in accordance with Art. 153(4) EPC

(43) Date of publication:
**26.10.2022  Bulletin 2022/43**

(21) Application number: **20915205.7**

(22) Date of filing: **16.10.2020**

(51) International Patent Classification (IPC):
**G06F 7/57** (2006.01)

(52) Cooperative Patent Classification (CPC):
**G06F 7/52; G06F 7/57**

(86) International application number:
**PCT/CN2020/121536**

(87) International publication number:
**WO 2021/147395 (29.07.2021 Gazette 2021/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **20.01.2020   CN 202010066005
31.03.2020   CN 202010245293**

(71) Applicant: **Huawei Technologies Co., Ltd.
Shenzhen, Guangdong 518129 (CN)**

(72) Inventors:
• **PAN, Qiuping**
  **Shenzhen, Guangdong 518129 (CN)**
• **LIN, Tengyi**
  **Shenzhen, Guangdong 518129 (CN)**
• **SHEN, Shengyu**
  **Shenzhen, Guangdong 518129 (CN)**

(74) Representative: **Kreuz, Georg Maria
Huawei Technologies Duesseldorf GmbH
Riesstraße 25
80992 München (DE)**

(54) **ARITHMETIC LOGIC UNIT, AND FLOATING-POINT NUMBER MULTIPLICATION CALCULATION METHOD AND DEVICE**

(57)    This application discloses an arithmetic logic unit, a floating-point number multiplication calculation method, and a device. The arithmetic logic unit provided in this application is applied to a computer chip, and includes at least one adjustment circuit and at least one multiplier-accumulator. Each adjustment circuit is configured to: obtain an input floating-point number, perform adjustment based on the input floating-point number to obtain an output floating-point number, and input the output floating-point number into the multiplier-accumulator. Each multiplier-accumulator is configured to: obtain a first product result based on the output floating-point number, match the first product result based on a first-precision floating-point number format, and output a first matching result. Therefore, in this application, the adjustment circuit converts input floating-point numbers with different precision into output floating-point numbers with same precision, and converts a multiplication operation performed on the input floating-point numbers with different precision into a multiplication operation performed on the output floating-point numbers with the same precision. In this way, there is no need to design a plurality of types of independent multipliers supporting different precision in a computing device, and computing resources are greatly saved.

FIG. 3

**Description**

This application claims priority to Chinese Patent Application No. 202010066005.X, filed with the China National Intellectual Property Administration on January 20, 2020 and entitled "FLOATING-POINT NUMBER ARITHMETIC METHOD, CHIP, AND SERVER", and to Chinese Patent Application No. 202010245293.5, filed with the China National Intellectual Property Administration on March 31, 2020 and entitled "ARITHMETIC LOGIC UNIT, FLOATING-POINT NUMBER MULTIPLICATION CALCULATION METHOD, AND DEVICE", which are incorporated herein by reference in their entireties.

**TECHNICAL FIELD**

This application relates to the field of data processing technologies, and in particular, to an arithmetic logic unit, a floating-point number multiplication calculation method, and a device.

**BACKGROUND**

A floating-point number is an important number format in a computer. The floating-point number in the computer includes three parts: a sign, an exponent, and a mantissa. To satisfy different requirements of different services for data precision, the computer usually needs to have a capability of performing a multiplication operation on floating-point numbers with different precision.

Currently, to satisfy multiplication operation requirements of the floating-point numbers with different precision, a plurality of independent multipliers are usually designed for the different precision. For example, when a processor needs to support half-precision, single-precision, and double-precision multiplication operations at the same time, at least three independent multipliers may be designed on a chip such as the processor, to respectively satisfy multiplication operation requirements of floating-point numbers with half precision, single precision, and double precision.

In a process of implementing this application, the inventor finds that the conventional technology has at least the following problems:

When the plurality of independent multipliers supporting the different precision are designed on the chip, and a system uses only one of the multipliers supporting one type of precision to perform calculation, remaining multipliers supporting other types of precision are in idle mode. Consequently, a lot of computing resources are wasted.

**SUMMARY**

This application provides a logical calculation unit, a floating-point number multiplication calculation method, and a device, to resolve a technical problem of wasting computing resources in the conventional technology. Technical solutions are as follows:

According to a first aspect, this application provides an arithmetic logic unit, where the arithmetic logic unit is used on a computer chip, and the arithmetic logic unit includes at least one adjustment circuit and at least one multiplier-accumulator. Each adjustment circuit is configured to: obtain an input floating-point number; perform adjustment based on the input floating-point number to obtain an output floating-point number, where the input floating-point number is a first-precision floating-point number, and the output floating-point number is a second-precision floating-point number; and input the output floating-point number into the multiplier-accumulator. Each multiplier-accumulator is configured to: obtain a first product result based on the output floating-point number, match the first product result based on a first-precision floating-point number format, and output a first matching result.

The adjustment circuit converts input floating-point numbers with different precision into output floating-point numbers with same precision, and converts a multiplication operation performed on the input floating-point numbers with different precision into a multiplication operation performed on the output floating-point numbers with the same precision. In this way, there is no need to design a plurality of types of independent multipliers supporting different precision in a computing device, and computing resources are greatly saved.

The computer chip may be a central processing unit (central processing unit, CPU) chip, a graphics processing unit (graphics processing unit, GPU) chip, a field-programmable gate array (field-programmable array gate, FPGA) chip, an application-specific integrated circuit (application-specific integrated circuit, ASIC) chip, another artificial intelligence (artificial intelligence, AI) chip, or the like. A specific type of the computer chip is not limited in this application.

The arithmetic logic unit (arithmetic and logic unit, ALU) is a physical circuit that is in a computation unit and that performs an arithmetic operation (including a basic operation such as addition, subtraction, multiplication, or division, or an additional operation thereof) and a logic operation (including shifting, logic testing, or comparison of two values). The arithmetic logic unit in this application may be an arithmetic logic unit dedicated to performing a floating-point number operation, and may be referred to as a floating-point number ALU.

The adjustment circuit and the multiplier-accumulator are physical circuits in the arithmetic logic unit, and the adjustment circuit is electrically connected to the multiplier-accumulator. The multiplier-accumulator is configured to perform an operation on a floating-point number with particular precision (for example, first precision). The adjustment circuit is configured to: convert a non-second-precision floating-point number into a second-precision floating-point number, and output the second-precision floating-point number to the multiplier-accumulator. Therefore, the multiplier-accumulator supporting one type of precision can implement operations on floating-point numbers with a plurality of types of precision.

In the foregoing solution, when the arithmetic logic unit performs an operation, the adjustment circuit obtains the first-precision input floating-point number, then performs adjustment based on the input floating-point number to obtain the second-precision output floating-point number, and then inputs the output floating-point number into the multiplier-accumulator. The multiplier-accumulator performs a multiply-accumulate operation on the second-precision floating-point number to obtain the first product result, then matches the first product result based on the first-precision floating-point number format, and outputs the first matching result. The first matching result is a product result that is a first-precision input floating-point number.

It should be noted that, when inputting output floating-point numbers into the multiplier-accumulator, the adjustment circuit may input the output floating-point numbers in a form of a multiplicator combination. To be specific, the adjustment circuit classifies a plurality of output floating-point numbers into a plurality of groups of output floating-point number combinations, and sequentially inputs the combinations into the multiplier-accumulator. The output floating-point number combination may include two output floating-point numbers respectively from two input floating-point numbers, or may include a plurality of output floating-point numbers respectively from a plurality of input floating-point numbers. This is not limited in this application.

For example, the arithmetic logic unit needs to perform multiplication calculation on input floating-point numbers C and D, and the adjustment circuit splits C into c1 and c2, and splits D into d1 and d2. In this case, $C \times D = (c1 + c2) \times (d1 + d2) = c1 \times d1 + c1 \times d2 + c2 \times d1 + c2 \times d2$. It can be learned that multiplication calculation performed on the input floating-point numbers C and D is converted into multiplication calculation performed on four groups of output floating-point numbers. In this case, the adjustment circuit may determine four groups of output floating-point number combinations, that is, c1 and d1, c1 and d2, c2 and d1, and c2 and d2, and sequentially input the four groups of output floating-point number combinations into the multiplier-accumulator. In this case, the multiplier-accumulator may accumulate products of the four groups of output floating-point numbers to obtain the first product result.

For ease of description, precision of the first-precision floating-point number may be represented as FP(1+E+M), and precision of the second-precision floating-point number may be represented as FP(1+e+m), where 1 represents a sign bit width, E represents an exponent bit width of the input floating-point number, e represents an exponent bit width of the output floating-point number, M represents a mantissa bit width of the input floating-point number, and m represents a mantissa bit width of the output floating-point number. In addition, for both the input floating-point number and the output floating-point number, the mantissa portions each further include a hidden integer bit. E, M, e, and m are all positive integers.

The following describes several typical types of first-precision floating-point numbers and second-precision floating-point numbers.

If a second-precision floating-point number has an exponent bit width of 9 bits, for example, an FP(1+9+10) or an FP(1+9+11), a first-precision floating-point number may be any floating-point number whose exponent bit width is less than 9 bits, for example, an FP(1+5+10), an FP(1+8+7), or an FP(1+8+23).

If a second-precision floating-point number has an exponent bit width of 12 bits, for example, an FP(1+12+10), an FP(1+12+11), or an FP(1+12+13), a first-precision floating-point number may be any floating-point number whose exponent bit width is less than 12 bits, for example, an FP(1+5+10), an FP(1+8+7), an FP(1+8+23), or an FP(1+11+52).

It should be noted that the first-precision floating-point numbers FP(1+5+10), FP(1+8+7), FP(1+8+23), and FP(1+11+52) may alternatively be respectively represented as a floating-point number in a half-precision floating-point format (half-precision floating-point format, FP16), a bfloat16 floating-point number, a floating-point number in a single-precision floating-point format (single-precision floating-point format, FP32), and a floating-point number in a double-precision floating-point format (double-precision floating-point format, FP64), and the second-precision floating-point numbers FP(1+9+10), FP(1+9+11), FP(1+12+10), FP(1+12+11), and FP(1+12+13) may alternatively be respectively represented as FP20, FP21, FP23, FP24 and FP26.

In a possible implementation, input floating-point numbers received by all adjustment circuits have different precision, and output floating-point numbers received by all multiplier-accumulators from all the adjustment circuits have same precision.

In the foregoing solution, to enable the arithmetic logic unit to support operations performed on floating-point numbers with a plurality of different precision, a plurality of adjustment circuits may be disposed, and input floating-point numbers received by all the adjustment circuits have different precision, and output floating-point numbers output by all the adjustment circuits have same precision. In other words, the plurality of adjustment circuits receive the input floating-point numbers with different precision, but can output the output floating-point numbers with the same precision.

Because the output floating-point numbers from the plurality of adjustment circuits have the same precision, only a multiplier-accumulator supporting one type of precision can be used to perform subsequent operations. The multiplier-accumulator may be referred to as a second-precision multiplier-accumulator.

In actual application, when receiving an input floating-point number, the arithmetic logic unit may further receive mode information, where the mode information may indicate a corresponding adjustment circuit. In this case, the arithmetic logic unit may input the input floating-point number into the corresponding adjustment circuit based on the mode information.

In a possible implementation, an exponent bit width of the output floating-point number is greater than an exponent bit width of the input floating-point number.

In the foregoing solution, the exponent bit width of the input floating-point number is less than the exponent bit width of the output floating-point number, to ensure that an actual exponent value of an output floating-point number obtained through splitting or conversion does not go beyond a representation range of exponent bits of the output floating-point number.

It should be understood that if the exponent bit width of the input floating-point number is greater than the exponent bit width of the output floating-point number, a representation range of an actual exponent value of the input floating-point number is greater than a representation range of an actual exponent value of the output floating-point number. In this case, if the actual exponent value of the input floating-point number goes beyond the representation range of the output floating-point number, the actual exponent value of the input floating-point number cannot be represented by using the exponent bits of the output floating-point number.

If the exponent bit width of the input floating-point number is equal to the exponent bit width of the output floating-point number, the representation range of the actual exponent value of the input floating-point number is the same as the representation range of the actual exponent value of the output floating-point number. However, in this case, when an operation of splitting the input floating-point number into a plurality of output floating-point numbers is performed, an actual exponent value of an output floating-point number needs to be correspondingly adjusted. The adjustment may cause a case in which exponent bits of the output floating-point number cannot represent the actual exponent value. For example, the actual exponent value of the input floating-point number is a lower limit of the representation range. In this case, if adjustment performed on the actual exponent value is decreasing the actual exponent value by a value, an adjusted actual exponent value goes beyond a representation range of the actual exponent value of the output floating-point number.

In another possible implementation, the exponent bit width of the output floating-point number may be less than the exponent bit width of the input floating-point number. In this case, an additional exponent bias value may be stored. The exponent bias value and a value stored in the exponent bits of the output floating-point number jointly represent the actual exponent value of the output floating-point number, and to resolve a problem that the actual exponent value of the input floating-point number goes beyond the representation range of the exponent bits of the output floating-point number.

In a possible implementation, each multiplier-accumulator includes an operation subcircuit and a format processing subcircuit. The operation subcircuit is configured to: receive the output floating-point number, and obtain the first product result based on the output floating-point number. The format processing subcircuit is configured to: receive a mode signal and the first product result, match the first product result based on the first-precision floating-point number format and based on the mode signal, and output the first matching result, where the mode signal is used to indicate output precision of the format processing subcircuit, and the output precision is precision of the input floating-point number.

In the foregoing solution, the multiplier-accumulator includes the operation subcircuit and the format processing subcircuit, and the operation subcircuit is connected to the format processing subcircuit. The operation subcircuit is configured to: perform a multiply-accumulate operation on an output floating-point number combination that is input to obtain the first product result, and output the first product result to the format processing subcircuit. The format processing subcircuit receives the first product result and mode information used to indicate target precision. Then, the format processing subcircuit matches the first product result based on a format of a floating-point number with the target-precision (for example, the first precision, that is, the precision of the input floating-point number), and outputs the first matching result.

When the adjustment circuit obtains one group of output floating-point number combination based on the input floating-point number, the operation subcircuit receives the group of output floating-point numbers, and performs a multiplication operation on floating-point numbers in the group of output floating-point numbers to obtain the first product result. Then, the operation subcircuit outputs the first product result to the format processing subcircuit. The format processing subcircuit matches the first product result based on the format of the floating-point number with the precision indicated by the mode information, and outputs the first matching result.

When the adjustment circuit obtains a plurality of groups of output floating-point number combinations based on the input floating-point number, the plurality of groups of output floating-point number combinations are sequentially input into the operation subcircuit. For an output floating-point number combination that is first input, the operation subcircuit performs a multiplication operation on floating-point numbers in the floating-point number combination, to obtain a first intermediate calculation result. For an output floating-point number combination that is second input, the operation subcircuit performs a multiplication operation on floating-point numbers in the output floating-point number combination that is second input, and performs an addition operation on a product result and the first intermediate calculation result, to obtain a second intermediate calculation result. Similarly, for each output floating-point number combination that is subsequently input, the operation subcircuit performs a multiplication operation on floating-point numbers in the output floating-point number combination that is input, and performs an addition operation on a product result and a previous intermediate calculation result, to obtain an intermediate calculation result corresponding to the current addition operation. Finally, after the plurality of groups of output floating-point number combinations are all input into the operation subcircuit, the operation subcircuit obtains the first product result. Then, the operation subcircuit outputs the first product result to the format processing subcircuit. The format processing subcircuit matches the first product result based on the format of the floating-point number with the precision indicated by the mode information, and outputs the first matching result.

In a possible implementation, if a mantissa bit width of the input floating-point number is less than or equal to a mantissa bit width of the output floating-point number, a quantity of the output floating-point numbers obtained through adjustment by each adjustment circuit is the same as a quantity of the received input floating-point numbers, each input floating-point number one-to-one corresponds to each output floating-point number, and a value represented by each input floating-point number is the same as a value represented by an output floating-point number corresponding to the input floating-point number.

In the foregoing solution, when the mantissa bit width of the input floating-point number is less than or equal to the mantissa bit width of the output floating-point number, a mantissa of the input floating-point number can be completely represented by a mantissa portion of the output floating-point number.

A conversion process in which a first-precision input floating-point number is converted into a second-precision output floating-point number is described by using an example in which an exponent bit width of the input floating-point number is less than an exponent bit width of the output floating-point number.

Sign bit: Ensure that a sign value of the output floating-point number is equal to a sign value of the input floating-point number.

Exponent bit: Ensure that an actual exponent value of the output floating-point number is equal to an actual exponent value of the input floating-point number. It may be understood that equal actual exponent values do not mean equal exponent storage values. An actual exponent value is equal to an exponent storage value minus a fixed bias value, floating-point numbers with different precision usually correspond to different fixed bias values (related to an exponent bit width), and the exponent bit width of the output floating-point number is greater than the exponent bit width of the input floating-point number. Therefore, an exponent storage value of the output floating-point number is not equal to an exponent storage value of the input floating-point number.

Mantissa bit: Ensure that a mantissa of the output floating-point number is equal to a mantissa of the input floating-point number. Because the mantissa bit width of the input floating-point number is less than or equal to the mantissa bit width of the output floating-point number, zeros need to be added to the last m-M bits of the output floating-point number, where m represents the mantissa bit width of the output floating-point number, and M represents the mantissa bit width of the input floating-point number.

In a possible implementation, if a mantissa bit width of the input floating-point number is greater than a mantissa bit width of the output floating-point number, a quantity of the output floating-point numbers obtained through adjustment by each adjustment circuit is greater than a quantity of the received input floating-point numbers, each input floating-point number corresponds to a plurality of output floating-point numbers, and a value represented by each input floating-point number is the same as a value represented by a sum of the plurality of output floating-point numbers corresponding to the input floating-point number.

In the foregoing solution, when the mantissa bit width of the input floating-point number is greater than the mantissa bit width of the output floating-point number, a mantissa of the input floating-point number cannot be completely represented by a mantissa portion of the one output floating-point number. Therefore, the input floating-point number needs to be split into the plurality of output floating-point numbers, and the mantissa of the input floating-point number is jointly represented by mantissa portions of the plurality of output floating-point numbers.

Each input floating-point number may be split into N output floating-point numbers, where N is a value obtained by rounding up $(M+1)/(m+1)$, $M+1$ represents the mantissa bit width of the input floating-point number plus one hidden integer bit, $m+1$ represents the mantissa bit width of the output floating-point number plus one hidden integer bit. Certainly, a mantissa of each input floating-point number may alternatively be split into more than N output floating-point numbers. This is not limited in this application.

A conversion process in which a first-precision input floating-point number is converted into a second-precision output floating-point number is described by using an example in which an exponent bit width of the input floating-point number is less than an exponent bit width of the output floating-point number.

Sign bit: Ensure that a sign value of each output floating-point number is equal to a sign value of the input floating-point number.

Mantissa bit: Ensure that a mantissa of the input floating-point number is split into a plurality of mantissa segments, and ensure that mantissa bits of each output floating-point number store one of the mantissa segments. It should be noted that the output floating-point number may store the mantissa segment from the input floating-point number in a plurality of manners. Two optional manners are provided below:

In a first manner, a left normalization operation is first performed on the mantissa segment from the input floating-point number until the most significant bit is 1, then the most significant bit 1 is hidden as an integer bit of the output floating-point number, and remaining mantissa bits of the mantissa segment is stored as a fractional part. It may be understood that, if the most significant bit of the mantissa segment has been 1, the left normalization operation does not need to be performed. If the left normalization operation cannot be performed until the most significant bit is 0, it indicates that the mantissa segment is 0.

In a second manner, the most significant bit of the mantissa segment from the input floating-point number is directly used as an integer bit of the output floating-point number, and remaining mantissa bits of the mantissa segment is stored as a fractional part. In this case, the output floating-point number obtained through splitting may not be a normalized number.

Exponent bit: Ensure that an actual exponent value of each output floating-point number is equal to an actual exponent value of the input floating-point number minus an exponent bias value. The exponent bias value is equal to a difference between a bit position at which the most significant bit of a mantissa segment included in the output floating-point number is located in mantissa bits of the input floating-point number and a bit position of the most significant bit of the input floating-point number.

In a possible implementation, a quantity of output floating-point numbers corresponding to each input floating-point number is determined based on a mantissa bit width of the input floating-point number and the mantissa bit width of the output floating-point number.

In the foregoing solution, it may be assumed that the quantity of output floating-point numbers corresponding to each input floating-point number is N, M+1 represents the mantissa bit width of the input floating-point number plus one hidden integer bit, and m+1 represents the mantissa bit width of the output floating-point number plus one hidden integer bit.

In this case, N is a value obtained by rounding up (M+1)/(m+1).

Therefore, when M is less than or equal to m, that is, when the mantissa bit width of the input floating-point number is less than or equal to the mantissa bit width of the output floating-point number, one input floating-point number is converted into one output floating-point number.

When M is greater than m, that is, when the mantissa bit width of the input floating-point number is greater than the mantissa bit width of the output floating-point number, one input floating-point number is split into N output floating-point numbers, where N is an integer greater than or equal to 2.

In a possible implementation, each adjustment circuit is specifically configured to: split a mantissa of each input floating-point number into a plurality of mantissa segments, where a bit width of each mantissa segment is less than or equal to the mantissa bit width of the output floating-point number; and determine, based on the plurality of mantissa segments of each input floating-point number, the plurality of output floating-point numbers corresponding to each input floating-point number.

The mantissa bit width of the output floating-point number is a mantissa bit width including one integer hidden bit.

In the solution described in this embodiment of this application, when the mantissa bit width of the input floating-point number is greater than the mantissa bit width of the output floating-point number, a mantissa of the input floating-point number cannot be completely represented by a mantissa portion of the one output floating-point number. Therefore, the input floating-point number needs to be split into the plurality of output floating-point numbers, and the mantissa of the input floating-point number is jointly represented by mantissa portions of the plurality of output floating-point numbers.

The mantissa of each input floating-point number may be split into N mantissa segments, where N is a value obtained by rounding up (M+1)/(m+1), M+1 represents the mantissa bit width of the input floating-point number plus one hidden integer bit, and m+1 represents the mantissa bit width of the output floating-point number plus one hidden integer bit. Certainly, the mantissa of each input floating-point number may alternatively be split into more than N mantissa segments. This is not limited in this application.

The mantissa of the input floating-point number may be split into N mantissa segments in any manner, provided that the bit widths of the mantissa segments obtained through splitting are less than or equal to the mantissa bit width of the output floating-point number. For example, during splitting, N mantissa segments with equal lengths may be obtained through splitting, or a bit width of a mantissa segment equals to the mantissa bit width of the output floating-point number may be first obtained through splitting. A specific splitting manner is not limited in this application.

For different mantissa segments, actual exponent values of output floating-point numbers including the mantissa segments are also different. Specifically, an actual exponent value of an output floating-point number is equal to an actual exponent value of the input floating-point number minus an exponent bias value. The exponent bias value is equal to a difference between a bit position at which the most significant bit of a mantissa segment included in the output floating-point number is located in mantissa bits of the input floating-point number and a bit position of the most significant bit of the input floating-point number.

In addition, for each output floating-point number obtained through splitting, a sign value is equal to the sign value of the input floating-point number.

In a possible implementation, the arithmetic logic unit includes at least two adjustment circuits. A first adjustment circuit in the at least two adjustment circuits is configured to obtain a first-precision input floating-point number. A second adjustment circuit is configured to obtain a third-precision input floating-point number. The first adjustment circuit adjusts the first-precision input floating-point number to a second-precision output floating-point number. The second adjustment circuit adjusts the third-precision input floating-point number to a second-precision output floating-point number. The at least one multiplier-accumulator obtains a second product result based on the received second-precision output floating-point numbers, matches the second product result based on a format of a floating-point number with corresponding precision and based on precision information of an adjustment circuit corresponding to the second-precision output floating-point number, and outputs a second matching result.

The third precision is different from the first precision.

In the solution described in this embodiment of this application, in actual application, the arithmetic logic unit may perform a multiplication operation on floating-point numbers with different precision, for example, a multiplication operation on the first-precision floating-point number and the third-precision floating-point number. In this case, during processing, the first adjustment circuit may adjust the obtained first-precision input floating-point number to the second-precision output floating-point number, and the second adjustment circuit may adjust the obtained third-precision input floating-point number to the second-precision output floating-point number. Then, the first adjustment circuit and the second adjustment circuit may output the second-precision output floating-point numbers to the multiplier-accumulator. The multiplier-accumulator performs a multiply-accumulate operation and format matching processing, and finally obtains the second matching result.

Precision of the second matching result may be the first precision, or may be the third precision. Alternatively, the multiplier-accumulator may output the second matching result that supports two types of precision: the first precision and the third precision. Correspondingly, when the second product result is matched to obtain the second matching result, the second product result may be matched to obtain a matching result with the first precision based on precision information (that is, the first precision) of the first adjustment circuit, the second product result may be matched to obtain a matching result with the third precision based on precision information (that is, the third precision) of the second adjustment circuit, or the second product result may be matched to obtain a matching result with the first precision and a matching result with the third precision respectively based on precision information of the first adjustment circuit and precision information of the second adjustment circuit.

In a possible implementation, a format of the input floating-point number satisfies the Institute of Electrical and Electronics Engineers (Institute of Electrical and Electronics Engineers, IEEE) binary floating point arithmetic standard, and a format of the output floating-point number does not satisfy the IEEE binary floating point arithmetic standard.

In the solution described in this embodiment of this application, the format of the input floating-point number may satisfy the IEEE binary floating point arithmetic standard.

The output floating-point number is merely an intermediate value generated by the arithmetic logic unit in a calculation process. Therefore, the output floating-point number does not need to be stored in a memory, and a format of the output precision floating-point number may not satisfy the IEEE binary floating point arithmetic standard.

The exponent bit width and the mantissa bit width of the output precision floating-point number may be customized based on an application requirement. For example, the exponent bit width of the output floating-point number may be defined to be large, and the mantissa bit width of the output floating-point number may be defined to be small. Operations performed on floating-point numbers include only simple logic such as comparison, addition, and subtraction between exponents of the floating-point numbers. Therefore, an increase in an exponent bit width leads to a small increase in a chip area. However, a multiplication operation needs to be performed on mantissas of the floating-point numbers. In this case, a required chip area is directly proportional to the square of the mantissa bit width. Therefore, the small mantissa bit width can reduce the chip area to some extent.

According to a second aspect, this application provides a floating-point number multiplication calculation method, where the method is applied to an arithmetic logic unit in a computer chip, and includes:

obtaining an input floating-point number, and performing adjustment based on the input floating-point number to obtain an output floating-point number, where the input floating-point number is a first-precision floating-point number, and the output floating-point number is a second-precision floating-point number; and
obtaining a first product result based on the output floating-point number, matching the first product result based on a first-precision floating-point number format, and outputting a first matching result.

In a possible implementation, an exponent bit width of the output floating-point number is greater than an exponent bit width of the input floating-point number.

In a possible implementation, the obtaining a first product result based on the output floating-point number, matching the first product result based on a first-precision floating-point number format, and outputting a first matching result includes:

obtaining the first product result based on the output floating-point number; and

receiving a mode signal, matching the first product result based on the first-precision floating-point number format and based on the mode signal, and outputting the first matching result, where the mode signal is used to indicate precision of the input floating-point number.

In a possible implementation, if a mantissa bit width of the input floating-point number is less than or equal to a mantissa bit width of the output floating-point number, a quantity of output floating-point numbers obtained through adjustment based on the input floating-point numbers is the same as a quantity of the input floating-point numbers, and a value represented by each input floating-point number is the same as a value represented by an output floating-point number corresponding to the input floating-point number.

In a possible implementation, if a mantissa bit width of the input floating-point number is greater than a mantissa bit width of the output floating-point number, a quantity of output floating-point numbers obtained through adjustment based on the input floating-point numbers is greater than a quantity of the input floating-point numbers, each input floating-point number corresponds to a plurality of output floating-point numbers, and a value represented by each input floating-point number is the same as a value represented by a sum of the plurality of output floating-point numbers corresponding to the input floating-point number.

In a possible implementation, a quantity of output floating-point numbers corresponding to each input floating-point number is determined based on a mantissa bit width of the input floating-point number and the mantissa bit width of the output floating-point number.

In a possible implementation, the adjustment step includes:

splitting a mantissa of each input floating-point number into a plurality of mantissa segments, where a bit width of each mantissa segment is less than or equal to the mantissa bit width of the output floating-point number; and

determining, based on the plurality of mantissa segments of each input floating-point number, the plurality of output floating-point numbers corresponding to each input floating-point number.

In a possible implementation, a format of the input floating-point number satisfies the Institute of Electrical and Electronics Engineers IEEE binary floating point arithmetic standard, and a format of the output floating-point number does not satisfy the IEEE binary floating point arithmetic standard.

According to a third aspect, a floating-point number multiplication calculation apparatus is provided, where the apparatus includes:

an adjustment module, configured to: obtain an input floating-point number, and perform adjustment based on the input floating-point number to obtain an output floating-point number, where the input floating-point number is a first-precision floating-point number, and the output floating-point number is a second-precision floating-point number; and

a matching module, configured to: obtain a first product result based on the output floating-point number, match the first product result based on a first-precision floating-point number format, and output a first matching result.

In a possible implementation, an exponent bit width of the output floating-point number is greater than an exponent bit width of the input floating-point number.

In a possible implementation, the matching module is configured to:

obtain the first product result based on the output floating-point number; and

receive a mode signal, match the first product result based on the first-precision floating-point number format and based on the mode signal, and output the first matching result, where the mode signal is used to indicate precision of the input floating-point number.

In a possible implementation, if a mantissa bit width of the input floating-point number is less than or equal to a mantissa bit width of the output floating-point number, a quantity of the output floating-point numbers obtained through adjustment based on the input floating-point numbers is the same as a quantity of the input floating-point numbers, each input floating-point number one-to-one corresponds to each output floating-point number, and a value represented by each input floating-point number is the same as a value represented by an output floating-point number corresponding to the input floating-point number.

In a possible implementation, if a mantissa bit width of the input floating-point number is greater than a mantissa bit width of the output floating-point number, a quantity of output floating-point numbers obtained through adjustment based on the input floating-point numbers is greater than a quantity of the input floating-point numbers, each input floating-point number corresponds to a plurality of output floating-point numbers, and a value represented by each input floating-point number is the same as a value represented by a sum of the plurality of output floating-point numbers corresponding to the input floating-point number.

In a possible implementation, a quantity of output floating-point numbers corresponding to each input floating-point number is determined based on a mantissa bit width of the input floating-point number and the mantissa bit width of the output floating-point number.

In a possible implementation, the adjustment module is specifically configured to:

split a mantissa of each input floating-point number into a plurality of mantissa segments, where a bit width of each mantissa segment is less than or equal to the mantissa bit width of the output floating-point number; and
determine, based on the plurality of mantissa segments of each input floating-point number, the plurality of output floating-point numbers corresponding to each input floating-point number.

In a possible implementation, a format of the input floating-point number satisfies the Institute of Electrical and Electronics Engineers IEEE binary floating point arithmetic standard, and a format of the output floating-point number does not satisfy the IEEE binary floating point arithmetic standard.

According to a fourth aspect, a chip is provided. The chip includes at least one arithmetic logic unit according to any one of the first aspect.

According to a fifth aspect, a computing device is provided. The computing device includes a motherboard and the chip according to the fourth aspect.

The chip is disposed on the motherboard.

According to a sixth aspect, a computer-readable storage medium is provided, including instructions. When the instructions in the computer-readable storage medium are executed by a computing device, the computing device performs the method according to the second aspect.

According to a seventh aspect, a computer program product including instructions is provided. When the computer program product runs on a computing device, the computing device performs the method according to the second aspect.

According to an eighth aspect, a computation unit is provided. The computation unit includes the arithmetic logic unit according to any one of the first aspect.

According to a ninth aspect, a computing device is provided, including a memory and a processor.

The memory is configured to store a computer program.

When the processor runs the computer program in the memory, the processor performs the method according to any one of the second aspect.

According to a tenth aspect, a computing device is provided, including a processor and an arithmetic logic unit.

The processor is configured to: obtain an input floating-point number; perform adjustment based on the input floating-point number to obtain an output floating-point number, where the input floating-point number is a first-precision floating-point number, and the output floating-point number is a second-precision floating-point number; and input the output floating-point number into the arithmetic logic unit.

The arithmetic logic unit is configured to: obtain a first product result based on the output floating-point number, match the first product result based on a first-precision floating-point number format, and output a first matching result.

In the solution described in this embodiment of this application, the processor may perform precision adjustment on the input floating-point number, to adjust the first-precision input floating-point number to the second-precision output floating-point number, and output the second-precision output floating-point number to the arithmetic logic unit.

The arithmetic logic unit may obtain the first product result based on the output floating-point number, match the first product result based on the first-precision floating-point number format, and output the first matching result. For specific functions of the arithmetic logic unit, refer to descriptions of the multiplier-accumulator in the first aspect. Details are not described herein again.

In a possible implementation, an exponent bit width of the output floating-point number is greater than an exponent bit width of the input floating-point number.

In a possible implementation, the arithmetic logic unit includes at least one multiplier-accumulator, and each multiplier-accumulator corresponds to second precision.

In a possible implementation, a format of the input floating-point number satisfies the Institute of Electrical and Electronics Engineers IEEE binary floating point arithmetic standard, and a format of the output floating-point number does not satisfy the IEEE binary floating point arithmetic standard.

Beneficial effects of the technical solutions provided in the embodiments of this application are as follows:

In the solutions described in this embodiment of this application, the adjustment circuit adjusts input floating-point numbers with different precision into output floating-point numbers with same precision, and converts a multiplication operation performed on the input floating-point numbers with different precision into a multiplication operation performed on the output floating-point numbers with the same precision. In this way, there is no need to design a plurality of type of additional independent multipliers supporting different precision in the computing device, and computing resources are greatly saved.

## BRIEF DESCRIPTION OF DRAWINGS

FIG. 1 is a schematic composition diagram of a floating-point number according to an embodiment of this application;

FIG. 2 is a diagram of a logical architecture of a chip according to an embodiment of this application;

FIG. 3 is a diagram of a logical architecture of an arithmetic logic unit according to an embodiment of this application;

FIG. 4 shows a structure of a floating-point number splitting and conversion subcircuit according to an embodiment of this application;

FIG. 5 is a schematic diagram of a structure of an adjustment circuit according to an embodiment of this application;

FIG. 6 is a schematic diagram of a structure of a multiplier-accumulator according to an embodiment of this application;

FIG. 7 is a schematic diagram of splitting a floating-point number according to an embodiment of this application;

FIG. 8 is a schematic diagram of splitting a floating-point number according to an embodiment of this application;

FIG. 9 is a schematic diagram of splitting a floating-point number according to an embodiment of this application;

FIG. 10 is a schematic diagram of splitting a floating-point number according to an embodiment of this application;

FIG. 11 is a flowchart of a floating-point number multiplication calculation method according to an embodiment of this application;

FIG. 12 is a schematic diagram of a structure of a floating-point number multiplication calculation apparatus according to an embodiment of this application; and

FIG. 13 is a schematic diagram of a structure of a computing device according to an embodiment of this application.

## DESCRIPTION OF EMBODIMENTS

For ease of description of the technical solutions provided in this application, a floating-point number is first described below.

The floating-point number is a numerical representation used in a computer to approximately represent any real number. The floating-point number may be represented in scientific notation. To be specific, a real number is expressed by using a mantissa, a base, an exponent, and a sign indicating positive or negative. For example, 19.625 may be expressed in decimal scientific notation as $1.9625 \times 10^1$, where 1.9625 is a mantissa, 10 is a base, and 1 is an exponent. For another example, if 19.625 is converted into a binary number 10011.101, 19.625 may be expressed in binary scientific notation as $1.0011101 \times 2^4$, where 1.0011101 is a mantissa, 2 is a based, and 4 is an exponent. The floating-point number uses an exponent to achieve an effect of floating a decimal point, to flexibly express real numbers in a larger range.

A binary floating-point number is usually stored in a computer according to a specific standard (for example, the IEEE 754 standard). The most significant bit of the binary floating-point number is designated as a sign bit. The second most significant E bits are designated as exponent bits for storing an exponent of the floating-point number. The last remaining M least significant bits are designated as mantissa bits for storing a mantissa of the floating-point number. In addition, the mantissa portion of the binary floating-point number further includes a hidden integer bit, and a base of the binary floating-point number stored in the computer is usually 2 by default. For example, $1.0011101 \times 2^4$ is stored in the computer in the following form: A sign bit is 0, indicating that a sign is positive; mantissa bits are 0011101, where the integer bit 1 is hidden; and an actual exponent value of exponent bits is 4, indicating that a decimal point floats by 4 bits.

A floating-point number may be represented as $Value = (-1)^s \times 2^E \times 1.M$ or $Value = (-1)^s \times 2^E \times 0.M$.

Value represents an actual value of the floating-point number. $(-1)^s$ represents a sign of the floating-point number, which may be positive or negative. When s=0, the sign is positive. When s=1, the sign is negative. E represents an actual exponent value of the floating-point number, and is used to represent a quantity of bits by which a decimal point floats. 2 represents a base. 1.M or 0.M represents a mantissa of the floating-point number, and may also be referred to as a significand, where 1 or 0 represents a hidden integer bit. When the floating-point number is a normalized number, the mantissa is 1.M. When the floating-point number is a denormalized number, the mantissa is 0.M. The denormalized number is a floating-point number whose exponent bits are all 0 and whose mantissa bits are not all 0. The normalized number is a floating-point number whose exponent bits are not all 0. Therefore, the hidden integer bit of the floating-point number may be determined based on the exponent bits and the mantissa bits of the floating-point number. For example, if the exponent bits are all 0 and the mantissa bits are not all 0, it indicates that the floating-point number is a denormalized number, and it can be determined that the hidden integer bit is 0.

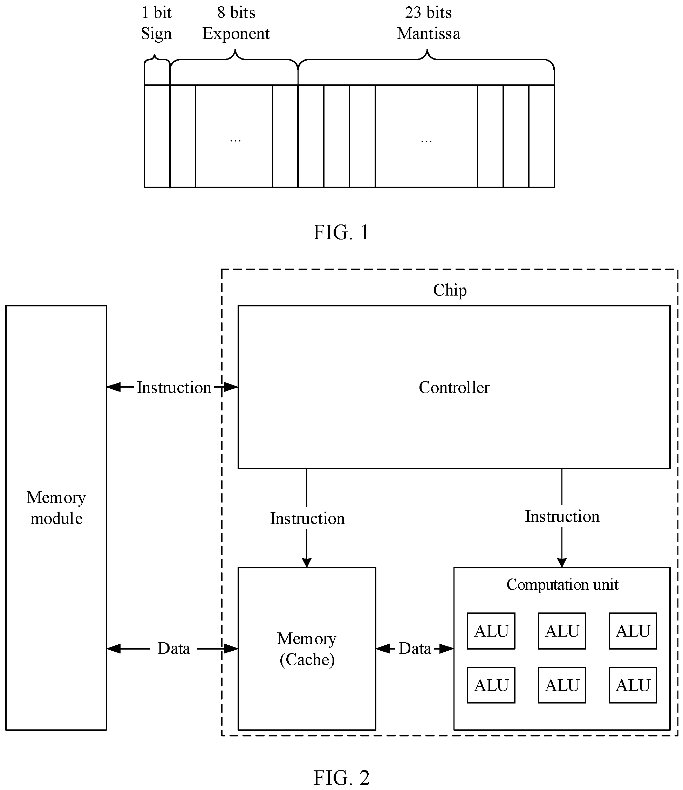

As shown in FIG. 1, a single-precision floating-point number is used as an example to describe a floating-point number in more detail.

The single-precision floating-point number occupies 4 bytes (32 bits) in storage of a computer and represents values in a wide range by using a "floating point" (floating decimal point) method.

The 32-bit single-precision floating-point number specified in the standard is mainly stored as a sign bit, exponent bits, and mantissa bits.

Sign bit: A storage bit width is 1 bit, where 0 indicates positive, and 1 indicates negative.

Exponent bit: A storage bit width is 8 bits, and the exponent bits may also be referred to as exponent bits. An exponent storage value ranges from 0 to 255, and a fixed bias value specified in the standard is equal to $2^{n-1}-1$, where n represents the storage bit width of the exponent bits. Therefore, the fixed bias value of the single-precision floating-point number is 127, and an actual exponent value ranges from 0-127=-127 to 255-127=128. The actual exponent value of the floating-point number is represented by subtracting the fixed bias value from the exponent storage value. For example, if the exponent storage value is 100, the actual exponent value is 100-127=-27. The foregoing exponent storage method has the following advantages: Sign representation for an exponent can be omitted, so that it is easier to compare values of exponents of two floating-point numbers because comparison of non-negative numbers can be performed through traversal starting from the most significant exponent bit.

Mantissa bit: A storage bit width is 23 bits, including 23 fractional bits on the right of the decimal point, that is, a fractional part of a mantissa. The mantissa bits further include a hidden integer bit, that is, an integer part of the mantissa. Therefore, although only the mantissa with the 23 fractional bits is stored, total precision of the mantissa bits is 24 bits. In addition, the mantissa may also be referred to as a significand.

For better understanding of the single-precision floating-point number, the following describes the floating-point number by using an example in which a decimal number 0.15625 is stored as a single-precision floating-point number.

Sign bit: If 0.15625 is a positive number, a sign bit is 0.

Mantissa bit: 0.15625 is converted into a binary number that is 0.00101. The decimal point of 0.00101 is moved rightward by three bits, so that an integer bit is 1, and a mantissa is 1.01. For the single-precision floating-point number, 23 bits+1 bit (hidden integer bit) of mantissa bits are stored. To be specific, the mantissa 1.01 is represented as 1.01000000000000000000000. Because the integer bit is hidden, the mantissa is actually stored as 01000000000000000000000.

Exponent bit: Because the decimal point is moved rightward by three bits, an actual exponent value should be -3. Then, the actual exponent value and the fixed bias value are added, and an exponent storage value 124 is obtained; and 124 is converted into a binary number that is 01111100.

Therefore, the single-precision floating-point number finally obtained and stored in the computer is represented as 0 01111100 01000000000000000000000.

Correspondingly, a process in which the single-precision floating-point number 0 01111100 01000000000000000000000 is converted into a decimal number may be as follows:

A sign bit is 0, indicating that the number is a positive number.

Mantissa bits are 01000000000000000000000, and exponent bits are not all 0. This indicates that the single-precision floating-point number is a normalized number. If a hidden bit in the mantissa bits is 1, the mantissa is 1.01.

An exponent storage value is 01111100, and 01111100 is converted into a decimal number that is 124. The fixed bias value 27 is subtracted from the exponent storage value 124, and an actual exponent value -3 is obtained. The actual exponent value is -3, indicating that a decimal point should be moved leftward by three digits. In this case, the decimal point of 1.01 is moved leftward by three digits, and 1.01 is changed to 0.00101.

Finally, 0.00101 is converted into a decimal number that is 0.15625.

It should be noted that, in addition to the single-precision floating-point number, there are also floating-point numbers with other types of precision such as a double-precision floating-point number, quadruple-precision floating-point number, a half-precision floating-point number, and a bfloat16 floating-point number.

A storage bit width of a sign bit of the half-precision floating-point number is 1 bit, a storage bit width of exponent bits is 5 bits, a storage bit width of mantissa bits is 10 bits, and there is also a hidden integer bit of 1 bit.

A storage bit width of a sign bit of the double-precision floating-point number is 1 bit, a storage bit width of exponent bits is 11 bits, a storage bit width of mantissa bits is 52 bits, and there is also a hidden integer bit of 1 bit.

A storage bit width of a sign bit of the quadruple-precision floating-point number is 1 bit, a storage bit width of exponent bits is 15 bits, a storage bit width of mantissa bits is 112 bits, and there is also a hidden integer bit of 1 bit.

A storage bit width of a sign bit of the bfloat16 floating-point number is 1 bit, a storage bit width of exponent bits is 8 bits, a storage bit width of mantissa bits is 10 bits, and there is also a hidden integer bit of 1 bit.

These floating-point numbers with other types of precision are similar to the single-precision floating-point number. Details are not described herein again.

It should be further noted that some special floating-point numbers exist in the foregoing plurality of types of floating-point numbers, and these floating-point numbers are stored in the computer in the following forms:

Positive infinity: The positive infinity has exponent bits that are all 1, mantissa bits that are all 0, and a sign bit that is 0, and may be represented as +INF

Negative infinity: The negative infinity has exponent bits that are all 1, mantissa bits that are all 0, and a sign bit that is 1, and may be represented as -INF

Not-a-number: The not-a-number has exponent bits that are all 1 and mantissa bits that are not all 0, and may be represented as NaN.

An embodiment of this application provides a floating-point number multiplication calculation method. The method may be applied to a chip. The chip includes a controller and a computation unit. The computation unit may receive an instruction from the controller, to perform multiplication calculation on a floating-point number. The chip may be a central processing unit (central processing unit, CPU) chip, a graphics processing unit (graphics processing unit, GPU) chip, a field-programmable gate array (field-programmable array, FPGA) chip, an application-specific integrated circuit (application-specific integrated circuits, ASIC) chip, another artificial intelligence (artificial intelligence, AI) chip, or the like.

As shown in FIG. 1, a logical architecture of the chip is described. The chip includes a controller, a computation unit, and a memory (Cache). The controller, the computation unit, and the memory are connected with each other. The controller is configured to send instructions to the memory and the computation unit, to control the memory and the computation unit. The computation unit is configured to receive the instruction sent by the controller, and perform corresponding processing according to the instruction, for example, perform the floating-point number multiplication calculation method provided in this application. The memory may also be referred to as a cache. The memory may store data, for example, may store a first-precision floating-point number, may send the stored data to the computation unit, or may receive data obtained through operation by the computation unit. The computation unit includes a plurality of arithmetic logic units (arithmetic and logic unit, ALU). The plurality of ALUs may perform an arithmetic operation (including a basic operation such as addition, subtraction, or multiplication, or an additional operation thereof) and a logic operation (including shifting, logic testing, or comparison of two values). The plurality of ALUs may include a floating-point number ALU dedicated to performing a floating-point number operation. The floating-point number ALU may perform the floating-point number multiplication calculation method provided in this application.

The chip may further be connected to a memory module (which may be a DRAM), and is configured to exchange data and an instruction with the memory module. As shown in FIG. 1, the memory module is connected to the controller and the memory. The memory module and the controller may send instructions to each other. The memory and the memory module may also send data to each other. For example, the controller reads an instruction from the memory module, and further sends the instruction to the computation unit, and the computation unit executes the instruction. The memory module sends data to the memory of the chip, and the memory further sends the data to the computation unit, so that the computation unit performs an operation.

It should be noted that the logical architecture of the chip shown in FIG. 1 may be a logical architecture of any chip, for example, a CPU chip or a GPU chip. A main difference between different types of chips is that ratios between quantities of controllers, memories, and computation unit s are different.

In the conventional technology, to implement multiplication operation requirements of floating-point numbers with different precision by a computer, a plurality of independent multipliers are usually designed for the different precision on a chip. For example, when the chip needs to support half-precision, single-precision, and double-precision multiplication operations at the same time, at least three independent multipliers may be designed on the chip, to respectively satisfy multiplication operation requirements of floating-point numbers with half precision, single precision, and double precision. When the plurality of independent multipliers supporting the different precision are designed on the chip, and a system uses only one of the multipliers supporting one type of precision to perform calculation, remaining multipliers supporting other types of precision are in idle mode. Consequently, a lot of computing resources are wasted.

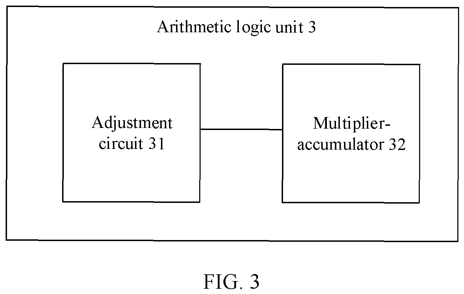

An embodiment of this application provides an arithmetic logic unit, as shown in FIG. 3, to resolve the technical problem existing in the conventional technology. The arithmetic logic unit 3 includes an adjustment circuit 31 and a multiplier-accumulator 32. The adjustment circuit 31 is configured to convert or split a plurality of types of input floating-point numbers into output floating-point numbers with same precision. The multiplier-accumulator 32 is configured to perform a multiply-accumulate operation on the output floating-point numbers obtained through splitting or conversion by the adjustment circuit 31, and obtain a calculation result. Then, a computation unit provided in this embodiment of this application may convert a multiplication operation performed on the plurality of types of input floating-point numbers into a multiply-accumulate operation performed on the output floating-point numbers with the same precision. Therefore, there is no need to design a plurality of independent multipliers that respectively support different precision on a chip, and computing resources are saved.

It should be noted that the input floating-point number is a floating-point number input into the adjustment circuit 31, and the output floating-point number is a floating-point number output by the adjustment circuit 31. Precision of the input floating-point number may be first precision (or third precision), and precision of the output floating-point number may be second precision. Therefore, the input floating-point number may also be referred to as a first-precision floating-point number (or a third-precision floating-point number), and the output floating-point number may also be referred to as a second-precision floating-point number.

The arithmetic logic unit 3 may include at least two adjustment circuits and at least one multiplier-accumulator. Input floating-point numbers received by all the adjustment circuits have different precision, and output floating-point numbers from all the adjustment circuits have same precision. In other words, the at least two adjustment circuits receive the input floating-point numbers with different precision, but can output the output floating-point numbers with the same precision. Because the output floating-point numbers from the at least two adjustment circuits have the same precision, only a multiplier-accumulator supporting one type of precision can be used to perform subsequent operations. In actual application, when receiving an input floating-point number, the arithmetic logic unit may further receive mode information, where the mode information may indicate a corresponding adjustment circuit. In this case, the arithmetic logic unit may input the input floating-point number into the corresponding adjustment circuit based on the mode information.

It should be understood that functions of the arithmetic logic unit 3 provided in this embodiment of this application may be implemented by using software, or may be implemented by using hardware, or some functions may be implemented by using software, and the other functions may be implemented by using hardware (for example, the function of the adjustment circuit 31 is implemented by executing software code, and the function of the multiplier-accumulator 32 is implemented by using a hardware circuit). It should be noted that, when the function of the adjustment circuit 31 is implemented by using hardware, the adjustment circuit 31 may specifically include various circuit signal lines, components, and the like. The circuit may be an analog circuit, a digital circuit, or a hybrid circuit of the analog circuit and the digital circuit. When the function of the adjustment circuit 31 is implemented by using software, the function of the module is implemented by a CPU by executing software instructions.

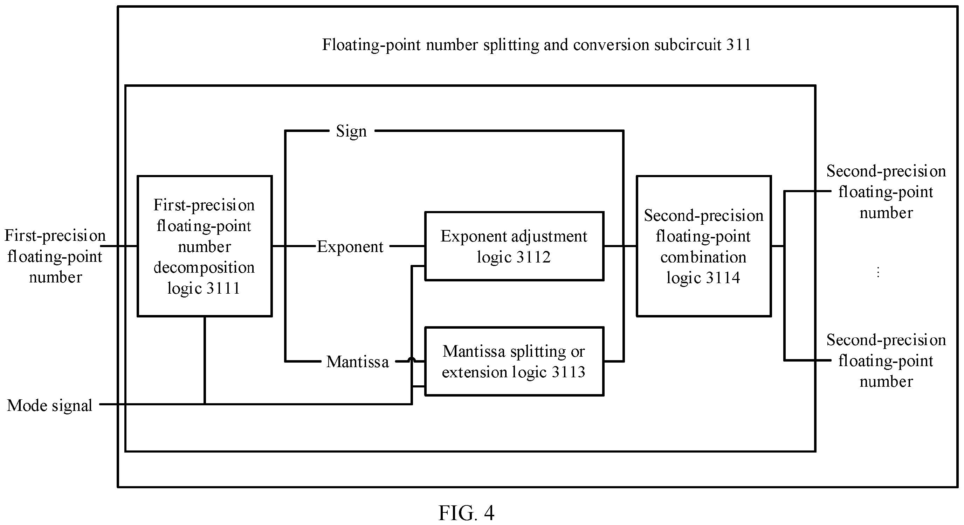

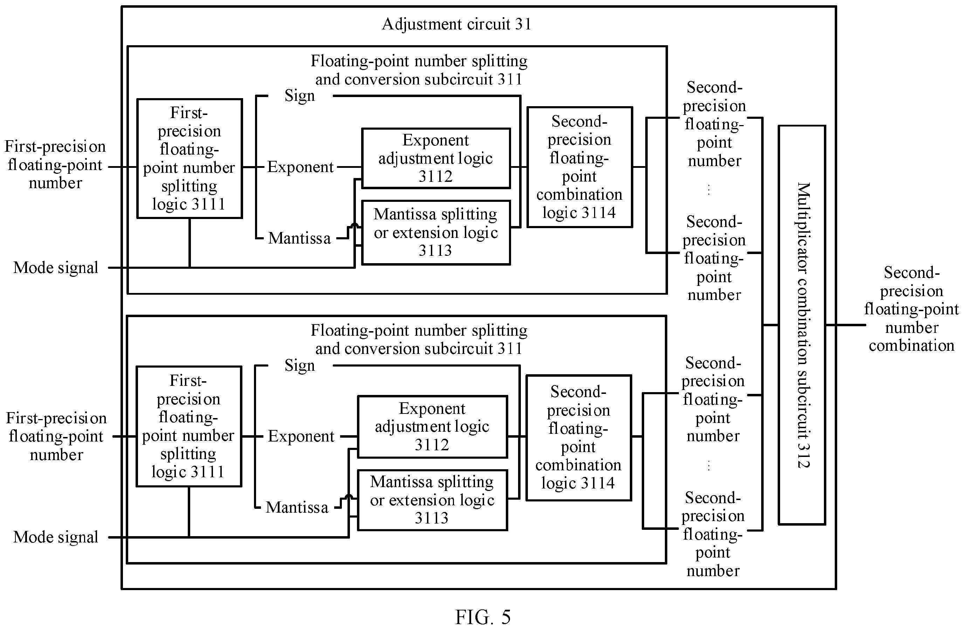

With reference to FIG. 4 and FIG. 5, the following describes the function of the adjustment circuit 31 in more detail.

As shown in FIG. 5, the adjustment circuit 31 includes a floating-point number splitting and conversion subcircuit 311 and a multiplicator combination subcircuit 312.

The following describes an internal structure and a function of the floating-point number splitting and conversion subcircuit 311 with reference to FIG. 4.

The first-precision floating-point number is input into the floating-point number splitting and conversion subcircuit 311. First floating-point number splitting logic 3111 in the floating-point number splitting and conversion subcircuit 311 decomposes the first-precision floating-point number into a sign, an exponent, and a mantissa. Then, exponent adjustment logic 3112 adjusts the exponent, and mantissa splitting or extension logic 3113 splits or extends the mantissa. Finally, second-precision floating-point number combination logic 3114 combines the sign, an adjusted exponent, and a split or extended mantissa, to form the second-precision floating-point number. It should be noted that, if the multiplier or multiplier-accumulator that is used supports separate input of the sign, the exponent, and the mantissa, the second-precision floating-point number combination logic 3114 in the floating-point number splitting and conversion subcircuit 311 may not be used. In other words, the second-precision floating-point number combination logic 3114 is optional. In addition, the floating-point number splitting and conversion subcircuit 311 may further receive a mode signal. The mode signal is used to indicate which type of first-precision floating-point number is to be converted into a second-precision floating-point number. For example, a mode 1 may indicate that an FP16 is to be converted into one FP26, and a mode 2 may indicate that an FP32 is to be split into two FP26s. A principle and a method for the floating-point number splitting and conversion subcircuit 311 to perform floating-point number splitting and conversion are described in detail below.

As shown in FIG. 5, the second-precision floating-point number obtained through combination by the floating-point number splitting and conversion subcircuit 311 is input into the multiplicator combination subcircuit 312 for multiplicator combination, and the multiplicator combination subcircuit 312 outputs one or more second-precision floating-point number combinations. It should be noted that, that the adjustment circuit 31 shown in FIG. 5 includes two floating-point number splitting and conversion subcircuits 311 is merely used as an example. In actual application, the adjustment circuit 31 may include any quantity of floating-point number splitting and conversion subcircuits 311. For example, the adjustment circuit 31 may include one floating-point number splitting and conversion subcircuit 311. A larger quantity of floating-point number splitting and conversion subcircuits 311 included in the adjustment circuit 31 indicates a faster splitting or conversion speed of the adjustment circuit 31.

Then, the adjustment circuit 31 inputs the second-precision floating-point number combination into the multiplier-accumulator 32. Finally, the multiplier-accumulator 32 may obtain a plurality of multiplication calculation results that are first-precision floating-point numbers.

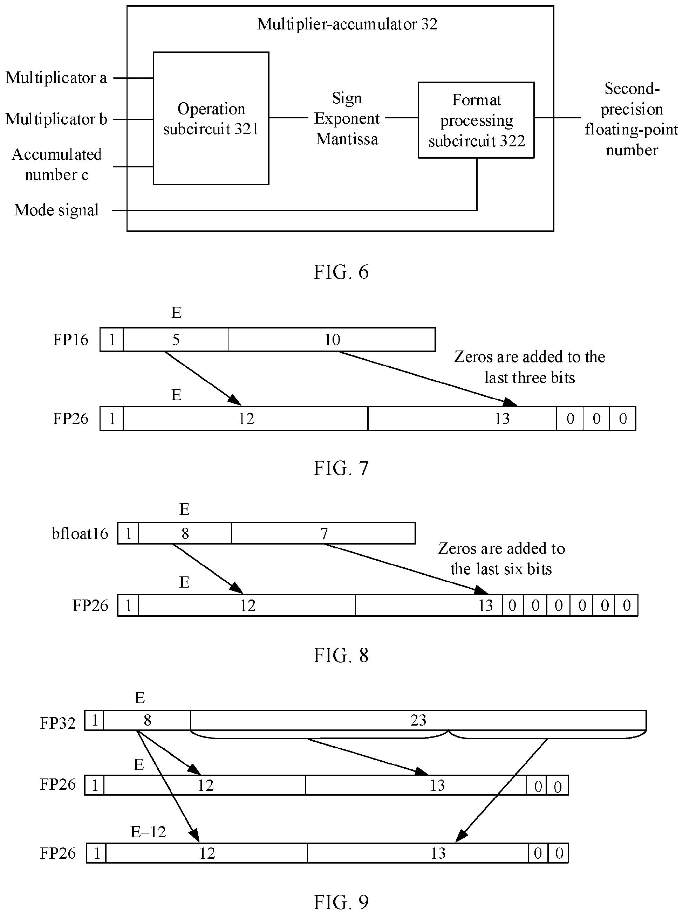

The multiplier-accumulator 32 may be shown in FIG. 6. The multiplier-accumulator 32 includes an operation subcircuit 321 and a format processing subcircuit 322. The following describes the function of the multiplier-accumulator 32 by using an example in which a multiplicator a, a multiplicator b, and an accumulated number c (that is, an operation of a×b+c) are input into the multiplier-accumulator 32.

The multiplicators a and b and the accumulated number c are input into the operation subcircuit 321 (a and b are the group of second-precision floating-point number combination output by the adjustment circuit 31). The operation subcircuit 321 decomposes the multiplicators a and b and the accumulated number c to obtain signs, exponents, and mantissas of a, b, and c. Then, the operation subcircuit 321 calculates an intermediate multiplication calculation result of a and b. If the signs of a and b are the same, a sign of the intermediate result is 0. The operation subcircuit 321 adds the exponents of a and b, and multiplies the mantissas of a and b to obtain intermediate results of the exponents and the mantissas. Next, the operation subcircuit 321 adds the intermediate multiplication calculation result and c to obtain an intermediate calculation result of a×b+c. When performing addition, the operation subcircuit 321 first aligns exponents. To be specific, the operation subcircuit 321 adjusts an exponent of the intermediate multiplication calculation result to being equal to the exponent of c, then performs addition or subtraction on mantissas, and obtains a first product result of a×b+c.

The operation subcircuit 321 inputs the first product result of a×b+c into the format processing subcircuit 322 for format processing. In addition, the format processing subcircuit 322 further receives the mode signal, to determine target precision for normalization. Then, the format processing subcircuit 322 adjusts and combines a received sign, exponent, and mantissa, for example, performs rounding on the mantissa and adjusts an exponent storage value, matches the first product result based on a first-precision floating-point number format, and outputs a first matching result.

It should be further noted that, if the multiplier-accumulator 32 supports separate input of a floating-point number, the signs, exponents, and mantissas of a, b, and c may be directly input. In this case, the operation subcircuit 321 does not need to perform decomposition processing. c may be an accumulated number that is externally input, or may be a multiply-accumulated value of second-precision floating-point numbers in a previous round. The multiply-accumulated value may be an intermediate calculation result output by the operation subcircuit. This is not limited in this application. To reduce a precision loss, the operation subcircuit 321 may extend the mantissas of the floating-point numbers when aligning the exponents. An exponent bit width of the intermediate calculation result output by the operation subcircuit 321 is greater than or equal to an exponent bit width of the second-precision floating-point number, and a mantissa bit width of the intermediate calculation result that is output is greater than or equal to a mantissa bit width of the first-precision floating-point number that is input.

The following describes in detail a principle for the floating-point number splitting and conversion subcircuit 311 to split or convert the first-precision floating-point number into the second-precision floating-point number.

First, for ease of description, the first-precision floating-point number and the second-precision floating-point number are described.

An exponent bit width of the first-precision floating-point number (namely, a storage bit width of an exponent) is less than an exponent bit width of the second-precision floating-point number.

The exponent bit width of the first-precision floating-point number is less than the exponent bit width of the second-precision floating-point number, to ensure that an actual exponent value of the second-precision floating-point number obtained through splitting or conversion does not go beyond a representation range of exponent bits of the second-precision floating-point number.

It should be understood that if the exponent bit width of the first-precision floating-point number is greater than the exponent bit width of the second-precision floating-point number, a representation range of an actual exponent value of the first-precision floating-point number is greater than a representation range of the second-precision floating-point number. If the actual exponent value of the first-precision floating-point number goes beyond the representation range of the second-precision floating-point number, the actual exponent value of the first-precision floating-point number cannot be represented by the exponent bits of the second-precision floating-point number.

If the exponent bit width of the first-precision floating-point number is equal to the exponent bit width of the second-precision floating-point number, the representation range of the actual exponent value of the first-precision floating-point number is the same as the representation range of the actual exponent value of the second-precision floating-point number. However, in this case, when an operation of splitting the first-precision floating-point number into a plurality of second-precision floating-point numbers is performed, an actual exponent value of a second-precision floating-point number needs to be correspondingly adjusted. The adjustment may cause a case in which exponent bits of the second-precision floating-point number cannot represent the actual exponent value. For example, the actual exponent value of the first-precision floating-point number is a lower limit of the representation range. In this case, if adjustment performed on the actual exponent value is decreasing the actual exponent value by a value, an adjusted actual exponent value goes beyond a representation range of the actual exponent value of the second-precision floating-point number.

For ease of description, precision of the first-precision floating-point number may be represented as FP(1+E+M), and precision of the second-precision floating-point number may be represented as FP(1+e+m), where 1 represents a sign bit width, E represents the exponent bit width of the first-precision floating-point number, e represents the exponent bit width of the second-precision floating-point number, M represents the mantissa bit width of the first-precision floating-point number, m represents a mantissa bit width of the second-precision floating-point number, and E is less than e. In addition, the mantissa portions of the first-precision floating-point number and the second-precision floating-point number each further include a hidden integer bit. E, M, e, and m are all positive integers.

The following describes several typical types of first-precision floating-point numbers and second-precision floating-point numbers.

If a second-precision floating-point number has an exponent bit width of 9 bits, for example, an FP(1+9+10) or an FP(1+9+11), a first-precision floating-point number may be any floating-point number whose exponent bit width is less than 9 bits, for example, an FP(1+5+10), an FP(1+8+7), or an FP(1+8+23).

If a second-precision floating-point number has an exponent bit width of 12 bits, for example, an FP(1+12+10), an FP(1+12+11), or an FP(1+12+13), a first-precision floating-point number may be any floating-point number whose exponent bit width is less than 12 bits, for example, an FP(1+5+10), an FP(1+8+7), an FP(1+8+23), or an FP(1+11+52).

It should be noted that the first-precision floating-point numbers FP(1+5+10), FP(1+8+7), FP(1+8+23), and FP(1+11+52) may alternatively be respectively represented as a floating-point number in a half-precision floating-point format (half-precision floating-point format, FP16), a bfloat16 floating-point number, a floating-point number in a single-precision floating-point format (single-precision floating-point format, FP32), and a floating-point number in a double-precision floating-point format (double-precision floating-point format, FP64), and the second-precision floating-point numbers FP(1+9+10), FP(1+9+11), FP(1+12+10), FP(1+12+11), and FP(1+12+13) may alternatively be respectively represented as FP20, FP21, FP23, FP24 and FP26.

It should be further noted that the second-precision floating-point number obtained through conversion or splitting in this application may not be in a common standard floating-point number format currently used in the industry. The second-precision floating-point number is an intermediate value generated by the computation unit in a calculation process. Therefore, the second-precision floating-point number does not need to be stored in a memory, and the exponent bit width and the mantissa bit width of the second-precision floating-point number may be customized based on an application requirement. The second-precision floating-point number may be a floating-point number with any precision. The second-precision floating-point number has the following features: The exponent bit width is large while the mantissa bit width is small. Operations performed on floating-point numbers include only simple logic such as comparison, addition, and subtraction between exponents of the floating-point numbers. Therefore, an increase in an exponent bit width leads to a small increase in a chip area. However, a multiplication operation needs to be performed on mantissas of the floating-point numbers. In this case, a required chip area is directly proportional to the square of the mantissa bit width. Therefore, the small mantissa bit width can reduce the chip area to some extent.

In the solution of this application, a second-precision floating-point number can support splitting or conversion of any first-precision floating-point number whose exponent bit width is less than an exponent bit width of the second-precision floating-point number. Specific precision, exponent bit width, and mantissa bit width of the second-precision floating-point number are not specifically limited in this application, and may be designed based on an actual application scenario.

In actual application, a second-precision floating-point number whose exponent bit width is large can support splitting and conversion of a first-precision floating-point number with high precision, and therefore is applicable to more scenarios. However, costs of manufacturing a multiplier-accumulator or a multiplier are high. In addition, a mantissa bit width of the second-precision floating-point number should also be large, to avoid obtaining an excessively large quantity of second-precision floating-point numbers through splitting. If the exponent bit width of the second-precision floating-point number is small, the costs of manufacturing the multiplier-accumulator or the multiplier are low. However, the second-precision floating-point number can only support splitting and conversion of a floating-point number with low precision, and may not be applicable to a scenario in which a precision requirement is high. In addition, if the mantissa bit width of the second-precision floating-point number is large, a small quantity of second-precision floating-point numbers may be obtained by splitting one first-precision floating-point number, and a small quantity of multiplication operations need to be performed. However, the costs of manufacturing the multiplier-accumulator or the multiplier are high. If the mantissa bit width of the second-precision floating-point number is small, the costs of manufacturing the multiplier-accumulator or the multiplier are low. However, a large quantity of second-precision floating-point numbers are obtained by splitting one first-precision floating-point number, and a large quantity of multiplication operations need to be performed. Therefore, in actual application, an appropriate second-precision floating-point number should be defined based on a specific application scenario of a chip together with a cost budget.

When the method provided in the embodiments of this application is applied to an AI chip, because the AI chip has a requirement for precision of a floating-point number that is mostly an FP16 or an FP32, and calculation of a floating-point number with precision of an FP64 is usually not involved, an exponent bit width of a second-precision floating-point number may be defined to be small, to reduce costs. For example, the exponent bit width may be 9 bits, and the second-precision floating-point number may be an FP20, an FP21, or the like. In this case, an FP16 floating-point number can be converted into an FP20 or FP21 floating-point number, or an FP32 floating-point number may be split into a plurality of FP20 or FP21 floating-point numbers.

However, when the method provided in the embodiments of this application is applied to a high performance computing (high performance computing, HPC) cluster that has a high requirement for precision of a floating-point number, an exponent bit width of a second-precision floating-point number should be large. For example, the exponent bit width may be 12 bits, and the second-precision floating-point number may be an FP23, an FP24, an FP26, or the like. In this case, an FP64 floating-point number may be split into a plurality of FP23, FP24, or FP26 floating-point numbers.

The following describes a principle of converting or splitting the first-precision floating-point number by using an example in which the first-precision floating-point number is represented as FP(1+E+M) and the second-precision floating-point number is represented as FP(1+e+m).

It should be noted that in this embodiment of this application, there are two different cases in which the first-precision floating-point number is converted into the second-precision floating-point number based on magnitudes of the mantissa bit widths of the first-precision floating-point number and the second-precision floating-point number.

1. If M is less than or equal to m, that is, the mantissa bit width of the first-precision floating-point number is less than or equal to the mantissa bit width of the second-precision floating-point number, format conversion is performed on all first-precision floating-point numbers to obtain a plurality of second-precision floating-point numbers, and the first-precision floating-point numbers one-to-one correspond to the second-precision floating-point numbers.

During conversion, a sign value of the second-precision floating-point number is equal to a sign value of the first-precision floating-point number.

The exponent adjustment logic 3112 ensures that the actual exponent value of the second-precision floating-point number is equal to the actual exponent value of the first-precision floating-point number. It may be understood that equal actual exponent values do not mean equal exponent storage values. An actual exponent value is equal to an exponent storage value minus a fixed bias value, floating-point numbers with different precision usually correspond to different fixed bias values (related to the exponent bit width), and the exponent bit width of the second-precision floating-point number is greater than the exponent bit width of the first-precision floating-point number. Therefore, an exponent storage value of the second-precision floating-point number is not equal to an exponent storage value of the first-precision floating-point number.

The mantissa splitting or extension logic 3113 ensures that a mantissa of the second-precision floating-point number is equal to a mantissa of the first-precision floating-point number. In this case, because the mantissa bit width of the first-precision floating-point number is less than or equal to the mantissa bit width of the second-precision floating-point number, zeros further need to be added to the last m-M bits of the second-precision floating-point number.

Finally, the second-precision floating-point number combination logic 3114 combines an adjusted mantissa, an exponent, and a sign to obtain the second-precision floating-point number.

The following describes a process of converting the first-precision floating-point number by using two specific instances:

(1) Convert one FP16 into one FP26.

As shown in FIG. 7, the FP16 in a standard format includes a 1-bit sign, a 5-bit exponent, and a 10-bit mantissa. In addition, the FP16 further includes a hidden 1-bit integer. For one FP16 in the standard format, the mantissa of the FP16 has 11 bits in total. The FP26 includes a 1-bit sign, a 12-bit exponent, and a 13-bit mantissa. In addition, the FP26 also includes a hidden 1-bit integer. For one FP26, the mantissa of the FP26 has 14 bits in total. Because a mantissa bit width of the FP16 is less than a mantissa bit width of the FP26, one FP16 may be directly converted into one FP26.

During conversion, if a sign value of the FP26 is equal to a sign value of the FP16, and an actual exponent value of the FP26 is equal to an actual exponent value of the FP16, an exponent storage value of the FP26 is equal to the actual exponent value plus 2047 ($2^{12-1}$ - 1), the mantissa of the FP16 is used as the mantissa of the FP26, and zeros are added to the last three bits of the mantissa of the FP26.

In addition, if the multiplier or the multiplier-accumulator in the computation unit supports only an operation on a normalized number, and the FP16 is not a normalized number, the multiplier or the multiplier-accumulator may first determine the actual exponent value of the FP16, and then perform a left normalization operation on the mantissa of the FP16, until an integer bit is 1. In this way, the FP26 includes a mantissa of the FP16 obtained by performing the left normalization operation, and the actual exponent value of the FP26 is equal to the actual exponent value of the FP16 minus a quantity of bits for which the left normalization operation is performed.

For example, a floating-point number of 10011.101 in an FP16 format is converted into a floating-point number in an FP26 format.

The floating-point number of 10011.101 in the FP16 format is 0 10011 0011101000, where a sign bit is 0, an exponent storage value is 19, an actual exponent value is 19-15=4 (a fixed bias value is $2^{5-1}$ - 1 = 15), a mantissa is 0011101000, and a hidden integer bit is 1.

0 10011 0011101000 is converted into a floating-point number in the FP26 format: A sign bit remains unchanged

EP 4 080 351 A1

and is 0; if actual exponent values are the same and are 4, an exponent storage value of the FP26 is 4+2047=2051, which is converted into a 12-bit binary number 100000000011; and a mantissa is 0011101000000 after zeros are added.

Finally, the FP26 obtained through conversion is 0 100000000011 0011101000000.

(2) Convert one bfloat16 into one FP26.

As shown in FIG. 8, the bfloat16 in a standard format includes a 1-bit sign, an 8-bit exponent, and a 7-bit mantissa. In addition, the bfloat16 further includes a hidden 1-bit integer. For one bfloat16 in the standard format, the mantissa of the bfloat16 has 8 bits in total. Because a mantissa bit width of the bfloat16 is less than a mantissa bit width of the FP26, one bfloat16 may be directly converted into one FP26.

During conversion, if a sign value of the FP26 is equal to a sign value of the bfloat16, and an actual exponent value of the FP26 is equal to an actual exponent value of the bfloat16, an exponent storage value of the FP26 is equal to the actual exponent value plus 2047, the mantissa of the bfloat16 is used as the mantissa of the FP26, and zeros are added to the last six bits of the mantissa of the FP26.

In addition, if the multiplier or the multiplier-accumulator in the computation unit supports only an operation on a normalized number, and the bfloat16 is not a normalized number, the multiplier or the multiplier-accumulator may first determine the actual exponent value of the bfloat16, and then perform a left normalization operation on the mantissa of the bfloat16, until an integer bit is 1. In this way, the FP26 includes a mantissa of the bfloat16 obtained by performing the left normalization operation, and the actual exponent value of the FP26 is equal to the actual exponent value of the bfloat16 minus a quantity of bits for which the left normalization operation is performed.

For example, 10011.101 in a bfloat16 format is converted into a number in an FP26 format.

A floating-point number of 10011.101 in the bfloat16 format is 0 10000011 0011101, where a sign bit is 0, an exponent storage value is 131, an actual exponent value is 131-127=4 (a fixed bias value is $2^{8-1}$ -1 = 127), a mantissa is 0011101, and a hidden integer bit is 1.

0 10000011 0011101 is converted into a floating-point number in the FP26 format: A sign bit remains unchanged and is 0; if actual exponent values are the same and are 4, an exponent storage value of the FP26 is 4+2047=2051, which is converted into a 12-bit binary number 100000000011; and a mantissa is 0011101000000 after zeros are added.

Finally, the FP26 obtained through conversion is 0 100000000011 0011101000000.

2. If M is greater than m, that is, the mantissa bit width of the first-precision floating-point number is greater than the mantissa bit width of the second-precision floating-point number, each first-precision floating-point number is split to obtain N second-precision floating-point numbers corresponding to the first-precision floating-point number, where N is a value obtained by rounding up (M+1)/(m+1).

During splitting, a sign value of each second-precision floating-point number is equal to a sign value of the first-precision floating-point number.

The mantissa splitting or extension logic 3112 splits the mantissa of the first-precision floating-point number into a plurality of mantissa segments, and ensures that mantissa bits of each second-precision floating-point number store one mantissa segment. It should be noted that the second-precision floating-point number may store the mantissa segment from the first-precision floating-point number in a plurality of manners. Two optional manners are provided below:

In a first manner, a left normalization operation is first performed on the mantissa segment from the first-precision floating-point number until the most significant bit is 1, then the most significant bit 1 is hidden as an integer bit of the second-precision floating-point number, and remaining mantissa bits of the mantissa segment is stored as a fractional part. It may be understood that, if the most significant bit of the mantissa segment has been 1, the left normalization operation does not need to be performed. If the left normalization operation cannot be performed until the most significant bit is 0, it indicates that the mantissa segment is 0. It should be noted that, in the first manner, in a process of determining an actual exponent value of each second-precision floating-point number, a quantity of bits for which the left normalization operation is performed should be considered when the left normalization operation is performed.

In a second manner, the most significant bit of the mantissa segment from the first-precision floating-point number is directly used as an integer bit of the second-precision floating-point number, and remaining mantissa bits of the mantissa segment is stored as a fractional part. In this case, the second-precision floating-point number obtained through splitting may not be a normalized number.

For example, a mantissa segment 001001000010 needs to be included in a mantissa of an FP26, and the mantissa of the FP26 may have at least two forms below:

A first form is as follows: 1.0010000100000. This form corresponds to the foregoing first manner. The left normalization operation is performed on 001001000010 to obtain 1001000010. The most significant bit 1 is used as an integer part of the mantissa and hidden, remaining mantissa bits are stored as a fractional part of the mantissa, and zeros need to be added to the last four bits of the mantissa.

A second form is as follows: 0.0100100001000. This form corresponds to the foregoing second manner. The most significant bit 0 of 001001000010 is used as an integer part of the mantissa, and remaining mantissa bits of the mantissa segment are stored as a fractional part. In this case, the hidden bit of the second-precision floating-point number needs to be explicitly represented, and zeros need to be added to the last two bits of the mantissa.

It should be noted that for different forms, actual exponent values are correspondingly different. For example, for 1.0010000100000 and 0.0100100001000, an actual exponent value corresponding to 1.0010000100000 is less than an actual exponent value corresponding to 0.0100100001000 by 2.

The exponent adjustment logic 3111 ensures that the actual exponent value of each second-precision floating-point number is equal to the actual exponent value of the first-precision floating-point number minus an exponent bias value. The exponent bias value is equal to a difference between a bit position at which the most significant bit of a mantissa segment included in the second-precision floating-point number is located in mantissa bits of the first-precision floating-point number and a bit position of the most significant bit of the first-precision floating-point number.

The following describes a process of splitting a floating-point number by using two specific instances:

(1) Split one FP32 into two FP26s.

As shown in FIG. 9, the FP32 in a standard format includes a 1-bit sign, an 8-bit exponent, and a 23-bit mantissa. In addition, the FP32 further includes a hidden 1-bit integer. For one FP32 in the standard format, the mantissa of the FP32 has 24 bits in total. A mantissa bit width of the FP32 is greater than a mantissa bit width of the FP26, and (1+23)/(1+13) is less than 2. Therefore, one FP32 can be split into two FP26s.

One FP32 may be split into two FP26s in a plurality of splitting manners. The following provides two possible splitting manners to split one FP32 into two FP26s.

A first splitting manner is as follows:

During splitting, sign values of the two FP26s are equal to a sign value of the FP32.

The mantissa of the FP32 is split into two mantissa segments, and a mantissa of each FP26 includes one mantissa segment. A first mantissa segment may include one integer bit and a mantissa with the first 13 bits, and a second mantissa segment may include a mantissa with the 14th bit to the 23rd bit.

An actual exponent value of an FP26 including the first mantissa segment is equal to an actual exponent value of the FP32, and an exponent bias value is equal to 0 that is equal to a bit position 1 at which the most significant bit of the first mantissa segment is located in the mantissa of the first precision floating-point number minus 1. An actual exponent value of an FP26 including the second mantissa segment is equal to the actual exponent value of the FP32 minus an exponent bias value 14, and the exponent bias value is equal to 14 that is equal to a bit position 15 at which the most significant bit of the second mantissa segment is located in the mantissa of the first-precision floating-point number minus 1. In addition, zeros need to be added to the last four bits of the FP26 that includes the second mantissa segment.

For example, FP32=$(-1)^s \times 2^E \times m$, where E represents the actual exponent value of the FP32, and m represents the mantissa of the FP32.

m=x.xxxx xxxx xxxx xyyy yyyy yyy, where values of both x and y are 0 or 1.

m is split into two mantissa segments:

$$m=x.xxxx\ xxxx\ xxxx\ x000\ 0000\ 000+0.0000\ 0000\ 0000\ 0yyy\ yyyy\ yyy$$

$$=x.xxxx\ xxxx\ xxxx\ x+y.yyyy\ yyyy\ y\times 2^{-14}.$$

Assuming that x.xxxx xxxx xxxx=m1 and y.yyyy yyyy y=m2, the two FP26s obtained through splitting are respectively FP26 = $(-1)^s \times 2^E \times m1$ and FP26 = $(-1)^s \times 2^{E-14} \times m2$.

Specifically, a floating-point number of 10011.1011000101100011001 in the FP32 format is split into two floating-point numbers in the FP26 format.

The floating-point number of 10011.1011000101100011001 in the FP32 format is:
0 10000011 00110110001011100011001, where a sign bit is 0, an exponent storage value is 131, an actual exponent value is 131-127=4 (a fixed bias value is $2^{8-1}$ -1 =127), a mantissa is 00110110001011100011001, and a hidden integer bit is 1.

0 10000011 00110110001011100011001 is split into two floating-point numbers in the FP26 format:
The mantissa 1.00111011000101100011001 is split into two mantissa segments: 1.0011101100010 and 1.100011001, a first floating-point number in the FP26 format includes the mantissa segment 1.0011101100010, and a second floating-point number in the FP26 format includes the mantissa segment 1.100011001.

For the first floating-point number in the FP26 format, a sign bit remains unchanged and is 0; if an actual exponent value is also equal to 4, an exponent storage value of the FP26 is 4+2047=2051, which is converted into a 12-bit binary number 100000000011; and if an integer bit of the mantissa 1.0011101100010 is hidden, the mantissa is 0011101100010. Therefore, the first floating-point number in the FP26 format that is finally obtained is 0 100000000011 0011101100010.

For the second floating-point number in the FP26 format, a sign bit remains unchanged and is 0; if an actual exponent value is equal to 4-14=-10, an exponent storage value of the FP26 is -10+2047=2037, which is converted into a 12-bit binary number 011111110101; if an integer bit of the mantissa 1.100011001 is hidden, the mantissa is 100011001; and 1000110010000 is obtained after zeros are added to the last four bits. Therefore, the second floating-point number in the FP26 format that is finally obtained is 0 011111110101 1000110010000.

A second splitting manner (as shown in FIG. 9) is as follows:

During splitting, sign values of the two FP26s are equal to a sign value of the FP32.

The mantissa of the FP32 is split into two mantissa segments, and a mantissa of each FP26 includes one mantissa segment. A first mantissa segment may include one hidden integer bit and a mantissa with the first 11 bits, and a second mantissa segment may include a mantissa with the 12th bit to the 23rd bit.

An actual exponent value of an FP26 including the first mantissa segment is equal to an actual exponent value of the FP32, and an actual exponent value of an FP26 including the second mantissa segment is equal to the actual exponent value of the FP64 minus an exponent bias value 12. The exponent bias value is equal to 12 that is equal to a bit position 13 at which the most significant bit of the second mantissa segment is located in the mantissa of the first-precision floating-point number minus 1. In addition, zeros need to be added to the last two bits of each of the two FP26s obtained through splitting.

For example, FP32=$(-1)^s \times 2^E \times m$, where E represents the actual exponent value of the FP32, and m represents the mantissa of the FP32.

m=x.xxxx xxxx xxxx xyyy yyyy yyy, where values of both x and y are 0 or 1.

m is split into two mantissa segments:

$$m=\text{x.xxxx xxxx xxx0 0000 0000 000}+\text{0.0000 0000 000y yyyy yyyy y}$$

$$=\text{x.xxxx xxxx xxx}+\text{y.yyyy yyyy y}\times 2^{-12}.$$

Assuming that x.xxxx xxxx xxx=m1 and y.yyyy yyyy y=m2, the two FP26s obtained through splitting are respectively FP26=$(-1)^s \times 2^E \times m1$ and FP26=$(-1)^s \times 2^{E-12} \times m2$.

In addition, if the multiplier or the multiplier-accumulator in the computation unit supports only an operation on a normalized number, the multiplier or the multiplier-accumulator may first perform a left normalization operation on each of the mantissa segments from the first-precision floating-point number, until the most significant bit is 1. Then, the most significant bit 1 is used as an integer bit of the second-precision floating-point number, and remaining mantissa bits in the mantissa segment are stored as a fractional part. Correspondingly, the actual exponent value should also be decreased based on a quantity of bits for which the left normalization operation is performed.

Specifically, a floating-point number of 10011.1011000101100011001 in the FP32 format is split into two floating-point numbers in the FP26 format.

The floating-point number of 10011.1011000101100011001 in the FP32 format is: 0 10000011 00110110001011100011001, where a sign bit is 0, an exponent storage value is 131, an actual exponent value is 131-127=4 (a fixed bias value is $2^{8-1} -1 = 127$), a mantissa is 0011011000101100011001, and a hidden integer bit is 1.

0 10000011 00110110001011100011001 is split into two floating-point numbers in the FP26 format in the second splitting manner.

The mantissa 1.0011101100010110001101 is split into two mantissa segments: 1.00111011000 and 101100011001, a first floating-point number in the FP26 format includes the mantissa segment 1.00111011000, and a second floating-point number in the FP26 format includes the mantissa segment 1.01100011001.

For the first floating-point number in the FP26 format, a sign bit remains unchanged and is 0; if an actual exponent value is also equal to 4, an exponent storage value of the FP26 is 4+2047=2051, which is converted into a 12-bit binary number 100000000011; if an integer bit of the mantissa 1.00111011000 is hidden, the mantissa is 00111011000; and 0011101100000 is obtained after zeros are added to the last two bits. Therefore, the first floating-point number in the FP26 format that is finally obtained is 0 100000000011 0011101100000.

For the second floating-point number in the FP26 format, a sign bit remains unchanged and is 0; if an actual exponent value is equal to 4-12=-8, an exponent storage value of the FP26 is -8+2047=2039, which is converted into a 12-bit binary number 011111110111; if an integer bit of the mantissa 1.01100011001 is hidden, the mantissa is 01100011001; and 0110001100100 is obtained after zeros are added to the last two bits. Therefore, the second floating-point number in the FP26 format that is finally obtained is 0 011111110111 0110001100100.

(2) Split one FP64 into four FP26s.

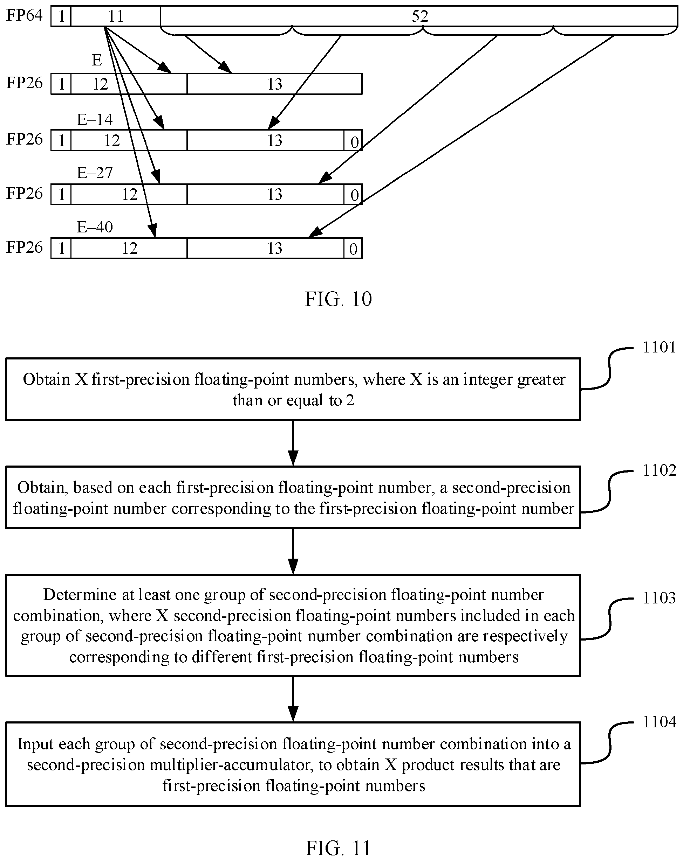

As shown in FIG. 10, the FP64 in a standard format includes a 1-bit sign, an 8-bit exponent, and a 52-bit mantissa. In addition, the FP64 further includes a hidden 1-bit integer. For one FP64 in the standard format, the mantissa of the FP64 has 53 bits in total. Because (52+1)/(13+1) is greater than 3 and less than 4, one FP64 can be split into four FP26s.

One FP64 may be split into four FP26s in a plurality of splitting manners. The following provides one possible splitting manner to split one FP64 into four FP26s.

During splitting, sign values of the four FP26s are equal to a sign value of the FP64.

The mantissa of the FP64 is split into four mantissa segments, and a mantissa of each FP26 includes one mantissa segment. A first mantissa segment includes one hidden integer bit and a mantissa with the first 13 bits, a second mantissa segment includes a mantissa with the 14th to the 26th bits, a third mantissa segment includes a mantissa with the 27th to the 39th bits, and a fourth mantissa segment includes a mantissa of the 40th bit to the 52nd bit.

An actual exponent value of an FP26 including the first mantissa segment is equal to an actual exponent value of the FP64. An actual exponent value of an FP26 including the second mantissa segment is equal to the actual exponent value of the FP64 minus an exponent bias value 14, and the exponent bias value is equal to a bit position 15 at which the most significant bit of the second mantissa segment is located in the mantissa of the first-precision floating-point number minus 1. An actual exponent value of an FP26 including the third mantissa segment is equal to the actual exponent value of the FP64 minus an exponent bias value 27, and the exponent bias value is equal to a bit position 28 at which the most significant bit of the third mantissa segment is located in the mantissa of the first-precision floating-point number minus 1. An actual exponent value of an FP26 including the fourth mantissa segment is equal to the actual exponent value of the FP64 minus an exponent bias value 40, and the exponent bias value is equal to a bit position 41 at which the most significant bit of the fourth mantissa segment is located in the mantissa of the first-precision floating-point number minus 1. In addition, one zero needs to be added to the last one bit of the FP26 including the second, third, or fourth mantissa segment.

For example, $FP64 = (-1)^s \times 2^E \times m$, where E represents the actual exponent value of the FP64, and m represents the mantissa of the FP64.

m=x.xxxx xxxx xxxx xyyy yyyy yyyy yyzz zzzz zzzz zzzw wwww wwww wwww, where all values of x, y, z, and w are 1 or 0. m is split into four mantissa segments:

$$m=\text{x.xxxx xxxx xxxx x000 0000 0000 0000 0000 0000 0000 0000 0000 0000}+0.0000$$

$$\text{0000 0000 0yyy yyyy yyyy yy00 0000 0000 0000 0000 0000 0000}+0.0000\text{ 0000 0000 0000 0000}$$

$$\text{0000 00zz zzzz zzzz zzz0 0000 0000 0000}+0.0000\text{ 0000 0000 0000 0000 0000 0000 0000 0000}$$

$$\text{0000 000w wwww wwww wwww}$$

$$=\text{x.xxxx xxxx xxxx x}+\text{y.yyyy yyyy yyyy}\times2^{-14}+\text{z.zzzz zzzz zzzz}\times2^{-27}+\text{w.wwww}$$

$$\text{wwww wwww}\times2^{-40}.$$

Assuming that x.xxxx xxxx xxxx=m1, y.yyyy yyyy yyyy=m2, z.zzzz zzzz zzzz=m3, and w.wwww wwww wwww=m4, the four FP24s obtained through splitting are $FP26 = (-1)^s \times 2^E \times m1$, $FP26 = (-1)^s \times 2^{E-14} \times m2$, $FP26=(-1)^s \times 2^{E-27} \times m3$ and $FP26 = (-1)^s \times 2^{E-40} \times m4$

In addition, if the multiplier or the multiplier-accumulator in the computation unit supports only an operation on a normalized number, the multiplier or the multiplier-accumulator may first perform a left normalization operation on each of the mantissa segments from the first-precision floating-point number, until the most significant bit is 1. Then, the most significant bit 1 is used as an integer bit of the second-precision floating-point number, and remaining mantissa bits in the mantissa segment are stored as a fractional part. Correspondingly, the actual exponent value should also be decreased based on a quantity of bits for which the left normalization operation is performed.

Specifically, a floating-point number of 10011.1011000101100011001001110110100101110010011 01001 in the FP64 format is split into four floating-point numbers in the FP26 format.

The floating-point number of 10011.10110001011000110010011101101001011100100101001 in the FP64 format is:
0 10000011 0011101100010110001100100111011010010111001001010010, where a sign bit is 0, an exponent storage value is 131, an actual exponent value is 131-127=4 (a fixed bias value is $2^{8-1}-1 = 127$), a mantissa is 0011101100010110001100100111011010010111001001010010, and a hidden integer bit is 1.

The mantissa 1.0011101100010110001100100111011010010111001001010010 is split into four mantissa segments: 1.0011101100010, 1.100011001001, 1.101101001011, and 1.001001010010. A first floating-point number in the FP26 format includes the mantissa segment 1.0011101100010, a second floating-point number in the FP26 format includes the mantissa segment 1.100011001001, a third floating-point number in the FP26 format includes the mantissa segment 1.101101001011, and a fourth floating-point number in the FP26 format includes the mantissa segment 1.001001010010.

For the first floating-point number in the FP26 format, a sign bit remains unchanged and is 0; if an actual exponent value is also equal to 4, an exponent storage value of the FP26 is 4+2047=2051, which is converted into a 12-bit binary number 100000000011; and if an integer bit of the mantissa 1.0011101100010 is hidden, the mantissa is 0011101100010. Therefore, the first floating-point number in the FP26 format that is finally obtained is 0 100000000011 0011101100010.

For the second floating-point number in the FP26 format, a sign bit remains unchanged and is 0; if an actual exponent value is 4-14=-10, an exponent storage value of the FP26 is - 10+2047=2037, which is converted into a 12-bit binary number 011111110101; if an integer bit of the mantissa 1.100011001001 is hidden, the mantissa is 100011001001; and 1000110010010 is obtained after one zero is added to the last one bit. Therefore, the second floating-point number in the FP26 format that is finally obtained is 0 011111110101 1000110010010.

For the third floating-point number in the FP26 format, a sign bit remains unchanged and is 0; if an actual exponent value is 4-27=-23, an exponent storage value of the FP26 is - 23+2047=2024, which is converted into a 12-bit binary number 011111101000; if an integer bit of the mantissa 1.101101001011 is hidden, the mantissa is 101101001011; and 1011010010110 is obtained after one zero is added to the last one bit. Therefore, the third floating-point number in the FP26 format that is finally obtained is 0 011111101000 1011010010110.

For the fourth floating-point number in the FP26 format, a sign bit remains unchanged and is 0; if an actual exponent value is 4-40=-36, an exponent storage value of the FP26 is - 36+2047=2011, which is converted into a 12-bit binary number 011111011011; if an integer bit of the mantissa 1.001001010010 is hidden, the mantissa is 001001010010; and 0010010100100 is obtained after one zero is added to the last one bit. Therefore, the fourth floating-point number in the FP26 format that is finally obtained is 0 011111011011 0010010100100.

The arithmetic logic unit shown in this embodiment of this application first obtains the first-precision floating-point number, and converts or decomposes the obtained first-precision floating-point number to obtain the corresponding second-precision floating-point number. Then, the arithmetic logic unit determines at least one group of second-precision floating-point number combination, where second-precision floating-point numbers included in each group of second-precision floating-point number combination correspond to different first-precision floating-point numbers. Finally, the arithmetic logic unit inputs the obtained second-precision floating-point number combination into a second-precision multiplier-accumulator, to obtain a product result that is a first-precision floating-point number. Therefore, in this embodiment of this application, the first-precision floating-point number is split or converted into the second-precision floating-point number, and a multiplication operation performed on the first-precision floating-point number is converted into a multiplication operation performed on the second-precision floating-point number. In this way, there is no need to design a plurality of types of additional independent first-precision multipliers in a computing device, and computing resources are greatly saved.

As shown in FIG. 11, an embodiment of this application further provides a floating-point number multiplication calculation method. The method may be implemented by a computation unit in the foregoing chip. Content may be as follows:

Step 1101: Obtain X first-precision floating-point numbers.

X is an integer greater than or equal to 2, and the X first-precision floating-point numbers may be a group of first-precision floating-point numbers on which a multiplication operation needs to be performed. X may be two or greater than two. In this embodiment of this application, descriptions are provided by using an example in which X is two.

In an implementation, the computation unit in the chip in a computing device may obtain the X to-be-calculated first-precision floating-point numbers from a memory.

Step 1102: Obtain, based on each first-precision floating-point number, a second-precision floating-point number corresponding to the first-precision floating-point number.

An exponent bit width of the first-precision floating-point number is less than an exponent bit width of the second-precision floating-point number.

In an implementation, after the first-precision floating-point number is obtained, the first-precision floating-point number further needs to be split or converted into second-precision floating-point numbers, so that a unified second-precision multiplier-accumulator or multiplier implements operations on a plurality of types of first-precision floating-point numbers.

It should be noted that the processing in step 1102 may be implemented by using software or may be implemented by hardware. When the function in step 1102 is executed by hardware, the function may be performed by a hardware circuit, for example, performed by the floating-point number splitting and conversion subcircuit 311 in FIG. 4 or FIG. 5. When the processing in step 1102 is implemented by using software, the processing may be implemented by the computation unit by executing instructions delivered by a controller.

For details of step 1102, refer to related content of the floating-point number splitting and conversion subcircuit 31 in the arithmetic logic unit part provided in the embodiment of this application. The details are not described herein again.

Step 1103: Determine at least one group of second-precision floating-point number combination, where X second-precision floating-point numbers included in each group of second-precision floating-point number combination are respectively corresponding to different first-precision floating-point numbers.

In an implementation, when multiplication calculation is to be performed on two first-precision floating-point numbers C and D, C is split into c1 and c2, D is split into d1 and d2, and $C \times D = (c1+c2) \times (d1+d2) = c1 \times d1 + c1 \times d2 + c2 \times d1 + c2 \times d2$. It can be learned that multiplication calculation performed on the first-precision floating-point numbers C and D is converted into multiplication calculation performed on four groups of second-precision floating-point numbers, and then intermediate calculation results of the four groups of second-precision floating-point numbers are accumulated to obtain a final calculation result. Therefore, after one or more second-precision floating-point numbers are obtained through conversion or split in step 1102, second-precision floating-point number combinations from different first-precision floating-point numbers further need to be determined.

The following provides descriptions by using examples in which two FP16s or bfloat16s are separately converted to obtain one FP26, two FP32s each are split into two FP26s, and two FP64s each are split into two FP26s.

(1) Two FP16s or two bfloat16s are separately converted to obtain one FP26.

The two FP16s or the two bfloat16s are A1 and B1 respectively. A1 may be converted to obtain a1, and B1 may be converted to obtain b1. In this case, a combination of a1 and b1 may be obtained.

(2) The two FP32s each are split to obtain two FP26s.

The two FP32s are A2 and B2 respectively. A2 may be split to obtain a2 and a3, and B2 may be split to obtain b2 and b3. In this case, for a2, a3, b2, and b3, there may be the following combinations: a2 and b2, a2 and b3, a3 and b2, and a3 and b3.

(3) The two FP64s each are split to obtain four FP26s.

The two FP64s are A3 and B3 respectively. A3 may be split to obtain a4, a5, a6, and a7, and B3 may be split to obtain b4, b5, b6, and b7. In this case, for a4, a5, a6, a7, b4, b5, b6, and b7, there may be the following combinations: a4 and b4, a4 and b5, a4 and b6, a4 and b7, a5 and b4, a5 and b5, a5 and b6, a5 and b7, a6 and b4, a6 and b5, a6 and b6, a6 and b7, a7 and b4, a7 and b5, a7 and b6, and a7 and b7.

It should be noted that the processing in step 1103 may be implemented by using software or may be implemented by hardware. When the function in step 113 is executed by hardware, the function may be executed by a hardware circuit, for example, performed by the multiplicator combination subcircuit 312 in FIG. 5. For details, refer to content related to the multiplicator combination subcircuit 312 in the arithmetic logic unit part provided in the embodiment of this application. When the processing in step 1102 is implemented by using software, the processing may be implemented by the computation unit by executing instructions delivered by a controller.

Step 1104: Input each group of second-precision floating-point number combination into a multiplier-accumulator, to obtain X product results that are first-precision floating-point numbers.

The calculation result is a first-precision floating-point number. The multiplier-accumulator may be a second-precision multiplier-accumulator.

In an implementation, all obtained combinations may be input into the multiplier-accumulator for calculation, to obtain a plurality of calculation results that are first-precision floating-point numbers. In addition, a corresponding mode signal may also be input in a process of inputting the combination. The mode signal is used to indicate precision of a calculation result output by the multiplier-accumulator. For related descriptions of the multiplier-accumulator, refer to descriptions in the arithmetic logic unit part provided in the embodiment of this application. Details are not described herein again.

When a plurality of determined groups of second-precision floating-point number combinations are input into the multiplier-accumulator, the combinations may be input into the multiplier-accumulator in a specific input order. In a possible implementation, the plurality of groups of second-precision floating-point numbers are input into the multiplier-accumulator in ascending order of sums of actual exponent values of the second-precision floating-point numbers included in each group of second-precision floating-point numbers. That is, a second-precision floating-point number combination including two second-precision floating-point numbers that have a smaller product is preferentially input into the multiplier-accumulator. The combinations are input in the foregoing order, so that a precision loss caused in internal calculation by the multiplier-accumulator is low.

In another possible implementation, all obtained combinations may be first input into a multiplier for calculation, to obtain intermediate calculation results, where the intermediate calculation results are first-precision floating-point numbers. Then, the obtained intermediate calculation results are input into an accumulator for accumulation, to obtain a plurality of calculation results that are first-precision floating-point numbers. In addition, a corresponding mode signal may also be input in a process of inputting the combination into the multiplier. The mode signal is used to indicate precision of a calculation result output by the multiplier. It should be noted that a logical architecture of the multiplier may be similar to a logical architecture of the multiplier-accumulator 32, but the multiplier does not have a corresponding function for performing an addition operation.

In the solution described in this embodiment of this application, the first-precision floating-point number is first obtained, the obtained first-precision floating-point number is converted or decomposed to obtain the corresponding second-precision floating-point number. Then, at least one group of second-precision floating-point number combination is determined, where second-precision floating-point numbers included in each group of second-precision floating-point number combination correspond to different first-precision floating-point numbers. Finally, the obtained second-precision floating-point number combination is input into the multiplier-accumulator, to obtain a product result that is a first-precision floating-point number. Therefore, in this embodiment of this application, the first-precision floating-point number is split or converted into the second-precision floating-point number, and a multiplication operation performed on the first-precision floating-point number is converted into a multiplication operation performed on the second-precision floating-point number. In this way, there is no need to design a plurality of types of additional independent first-precision multipliers in the computing device, and computing resources are greatly saved.

It should be further noted that, in the foregoing described solution, precision of the first-precision floating-point numbers obtained by the computation unit is the same, that is, a multiplication operation performed by the computation unit is only a multiplication operation performed on X first-precision floating-point numbers with same precision. However, in actual application, the computing device may further perform an operation on floating-point numbers with different precision. In this case, a corresponding processing process of the computation unit may further include the following steps: The computation unit obtains L third-precision floating-point numbers, where an exponent bit width of the third-precision floating-point number is less than an exponent bit width of the second-precision floating-point number, and L is greater than or equal to 1. To be specific, for a specific process of obtaining the X first-precision floating-point numbers and the L third-precision floating-point numbers, refer to related content in step 1101. Details are not described herein again. For the third-precision floating-point number, refer to the descriptions of the first-precision floating-point number. Details are not described herein again. The third-precision floating-point number may be understood as a first-precision floating-point number whose precision is different from precision of the obtained X first-precision floating-point numbers.

The computation unit obtains, based on each third-precision floating-point number, a second-precision floating-point number corresponding to the third-precision floating-point number. For a specific process of obtaining the second-precision floating-point number based on the third-precision floating-point number, refer to related content in step 1102. Details are not described herein again.

The computation unit determines at least one group of updated second-precision floating-point number combination, where each group of updated second-precision floating-point numbers include X+L second-precision floating-point numbers, and the X+L second-precision floating-point numbers include X second-precision floating-point numbers corresponding to the X first-precision floating-point numbers and L second-precision floating-point numbers corresponding to the L third-precision floating-point numbers. To be specific, after the second-precision floating-point number corresponding to the third-precision floating-point number is determined, the newly obtained second-precision floating-point number is added to a second-precision floating-point number combination obtained based on the first-precision floating-point number, to obtain an updated second-precision floating-point number combination.

The computation unit inputs each group of updated second-precision floating-point number combination into the multiplier-accumulator to obtain X product results that are first-precision floating-point numbers and L product results that are third-precision floating-point numbers.

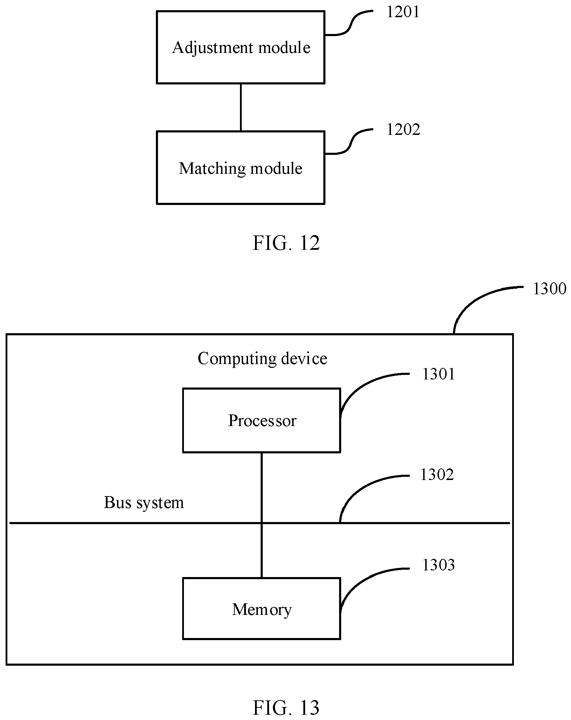

Based on a same technical conception, an embodiment of this application further provides a floating-point number multiplication calculation apparatus. As shown in FIG. 12, the apparatus includes:

an adjustment module 1201, configured to: obtain X input floating-point numbers, and perform adjustment based on the X input floating-point numbers to obtain Y output floating-point numbers, where the X input floating-point numbers are first-precision floating-point numbers, the Y output floating-point numbers are second-precision floating-point numbers, and Y and X each are a positive integer greater than or equal to 2; and

a matching module 1202, configured to: obtain a first product result based on the Y output floating-point numbers, match the first product result based on a first-precision floating-point number format, and output a first matching result.

In a possible implementation, an exponent bit width of the output floating-point number is greater than an exponent bit width of the input floating-point number.

In a possible implementation, the matching module 1202 is configured to:

obtain the first product result based on the Y output floating-point numbers; and

receive a mode signal, match the first product result based on the first-precision floating-point number format and based on the mode signal, and output the first matching result, where the mode signal is used to indicate to output a value with the first precision.

In a possible implementation, a mantissa bit width of the input floating-point number is less than or equal to a mantissa bit width of the output floating-point number.

The adjustment module 1201 is configured to:

convert the X input floating-point numbers to obtain Y output floating-point numbers, where X is equal to Y, each input floating-point number is one-to-one corresponds to each output floating-point number, and a value represented by each input floating-point number is the same as a value represented by an output floating-point number corresponding to the input floating-point number.

In a possible implementation, a mantissa bit of the input floating-point number is greater than a mantissa bit width of the output floating-point number.

The adjustment module 1201 is configured to:

split the X input floating-point numbers to obtain Y output floating-point numbers, where Y is greater than X, each input floating-point number corresponds to a plurality of output floating-point numbers, and a value represented by each input floating-point number is the same as a value represented by a sum of a plurality of output floating-point numbers corresponding to the input floating-point number.

In a possible implementation, a quantity of output floating-point numbers corresponding to each input floating-point number is determined based on a mantissa bit width of the input floating-point number and the mantissa bit width of the output floating-point number.

In a possible implementation, the adjustment module 1201 is specifically configured to:

split a mantissa of each input floating-point number into a plurality of mantissa segments, where a bit width of each mantissa segment is less than or equal to the mantissa bit width of the output floating-point number; and

determine, based on the plurality of mantissa segments of each input floating-point number, the plurality of output floating-point numbers corresponding to each input floating-point number.

In a possible implementation, the adjustment module 1201 is further configured to: obtain L input floating-point numbers, where the L input floating-point numbers are third-precision floating-point numbers; and obtain K output floating-point numbers based on the L input floating-point numbers, where the K output floating-point numbers are second-precision floating-point numbers, and L and K each are a positive integer greater than or equal to 1.

The matching module 1202 is further configured to obtain a second product result based on the Y output floating-point numbers and the K output floating-point numbers, match the second product result based on the first-precision floating-point number format, and output a second matching result.

In a possible implementation, a format of the input floating-point number satisfies the Institute of Electrical and Electronics Engineers IEEE binary floating point arithmetic standard, and a format of the output floating-point number does not satisfy the IEEE binary floating point arithmetic standard.

It should be noted that all the foregoing modules may be implemented by a processor, may be implemented by a processor cooperating with a memory, or may be implemented by executing program instructions in a memory by a processor.

It should be further noted that, for a case that the floating-point number multiplication calculation apparatus provided in the foregoing embodiment calculates a floating-point number, division into the foregoing functional modules is merely used as an example for description. In actual application, the foregoing functions may be allocated to and implemented by different functional modules as required. That is, an internal structure of a computing device is divided into different functional modules, to implement all or some of the foregoing functions. In addition, the floating-point number multiplication calculation apparatus provided in the foregoing embodiment has the same conception as the floating-point number multiplication calculation method embodiment. For a specific implementation process of the floating-point number multiplication calculation apparatus, refer to the method embodiment. Details are not described herein again.

As shown in FIG. 13, an embodiment of this application provides a computing device 1300. The computing device 1300 includes at least one processor 1301, a bus system 1302, and a memory 1303.

The processor 1301 may be a general-purpose central processing unit (central processing unit, CPU), a network processor (network processor, NP), a graphics processing unit (graphics processing unit, GPU) microprocessor, an application-specific integrated circuit (application-specific integrated circuit, ASIC), or one or more integrated circuits configured to control program execution in the solutions of this application.

The bus system 1302 may include a path for transmitting information between the foregoing components.

The memory 1303 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Bluray disc, and the like), a magnetic disk storage medium or another magnetic storage device, or any other medium that can be configured to carry or store expected program code in an instruction form or a data structure form and that can be accessed by a computer. However, the memory is not limited thereto. The memory may exist independently, and is connected to the processor through a bus. The memory may alternatively be integrated with the processor.

The memory 1303 is configured to store application code for executing the solutions in this application, and the processor 1301 controls the execution. The processor 1301 is configured to execute the application code stored in the memory 1303, to implement the floating-point number calculation method provided in this application.

In a specific implementation, in an embodiment, the processor 1301 may include one or more CPUs.

A person of ordinary skill in the art may understand that all or some of the steps in the embodiments may be implemented by hardware or a program instructing related hardware. The program may be stored in a computer-readable storage medium. The computer-readable storage medium may include a read-only memory, a magnetic disk, an optical disc, or the like.

The foregoing descriptions are merely embodiments of this application, but are not intended to limit this application. Any modification, equivalent replacement, or improvement made without departing from the spirit and the principle of this application should fall within the protection scope of this application.

### Claims

1. An arithmetic logic unit, applied to a computer chip, wherein the arithmetic logic unit comprises at least one adjustment circuit and at least one multiplier-accumulator, wherein

   each adjustment circuit is configured to: obtain an input floating-point number; perform adjustment based on the input floating-point number to obtain an output floating-point number, wherein the input floating-point number is a first-precision floating-point number, and the output floating-point number is a second-precision floating-point number; and input the output floating-point number into the multiplier-accumulator; and
   each multiplier-accumulator is configured to: obtain a first product result based on the output floating-point number, match the first product result based on a first-precision floating-point number format, and output a first matching result.

2. The arithmetic logic unit according to claim 1, wherein input floating-point numbers received by all adjustment circuits have different precision, and output floating-point numbers received by all multiplier-accumulators from all the adjustment circuits have same precision.

3. The arithmetic logic unit according to claim 1 or 2, wherein an exponent bit width of the output floating-point number is greater than an exponent bit width of the input floating-point number.

4. The method according to any one of claims 1 to 3, wherein each multiplier-accumulator comprises an operation subcircuit and a format processing subcircuit, wherein

   the operation subcircuit is configured to: receive the output floating-point number, and obtain the first product result based on the output floating-point number; and
   the format processing subcircuit is configured to: receive a mode signal and the first product result, match the first product result based on the first-precision floating-point number format and based on the mode signal, and output the first matching result, wherein the mode signal is used to indicate output precision of the format processing subcircuit, and the output precision is precision of the input floating-point number.

5. The arithmetic logic unit according to any one of claims 1 to 4, wherein if a mantissa bit width of the input floating-point number is less than or equal to a mantissa bit width of the output floating-point number, a quantity of the output floating-point numbers obtained through adjustment by each adjustment circuit is the same as a quantity of the received input floating-point numbers, each input floating-point number one-to-one corresponds to each output floating-point number, and a value represented by each input floating-point number is the same as a value represented by an output floating-point number corresponding to the input floating-point number.

6. The arithmetic logic unit according to any one of claims 1 to 4, wherein if a mantissa bit width of the input floating-point number is greater than a mantissa bit width of the output floating-point number, a quantity of the output floating-point numbers obtained through adjustment by each adjustment circuit is greater than a quantity of the received input floating-point numbers, each input floating-point number corresponds to a plurality of output floating-point numbers, and a value represented by each input floating-point number is the same as a value represented by a sum of the plurality of output floating-point numbers corresponding to the input floating-point number.

7. The arithmetic logic unit according to claim 6, wherein a quantity of output floating-point numbers corresponding to each input floating-point number is determined based on a mantissa bit width of the input floating-point number and the mantissa bit width of the output floating-point number.

8. The arithmetic logic unit according to claim 6 or 7, wherein each adjustment circuit is specifically configured to:

   split a mantissa of each input floating-point number into a plurality of mantissa segments, wherein a bit width of each mantissa segment is less than or equal to the mantissa bit width of the output floating-point number; and
   determine, based on the plurality of mantissa segments of each input floating-point number, the plurality of output floating-point numbers corresponding to each input floating-point number.

9. The arithmetic logic unit according to any one of claims 1 to 8, wherein the arithmetic logic unit comprises at least two adjustment circuits, wherein a first adjustment circuit in the at least two adjustment circuits is configured to obtain a first-precision input floating-point number, a second adjustment circuit in the at least two adjustment circuits is configured to obtain a third-precision input floating-point number, the first adjustment circuit adjusts the first-precision input floating-point number to a second-precision output floating-point number, and the second adjustment circuit adjusts the third-precision input floating-point number to a second-precision output floating-point number; and
   the at least one multiplier-accumulator obtains a second product result based on the received second-precision output floating-point numbers, matches the second product result based on a format of a floating-point number with corresponding precision and based on precision information of an adjustment circuit corresponding to the second-precision output floating-point number, and outputs a second matching result.

10. The arithmetic logic unit according to any one of claims 1 to 9, wherein a format of the input floating-point number satisfies the Institute of Electrical and Electronics Engineers IEEE binary floating point arithmetic standard, and a format of the output floating-point number does not satisfy the IEEE binary floating point arithmetic standard.

11. A chip, wherein the chip comprises at least one of the arithmetic logic unit according to any one of claims 1 to 10.

12. A computing device, wherein the computing device comprises a motherboard and the chip according to claim 11, wherein
   the chip is disposed on the motherboard.

13. A floating-point number multiplication calculation method, applied to an arithmetic logic unit on a computer chip, wherein the method comprises:

   obtaining an input floating-point number, and performing adjustment based on the input floating-point number to obtain an output floating-point number, wherein the input floating-point number is a first-precision floating-point number, and the output floating-point number is a second-precision floating-point number; and
   obtaining a first product result based on the output floating-point number, matching the first product result based on a first-precision floating-point number format, and outputting a first matching result.

14. The method according to claim 13, wherein an exponent bit width of the output floating-point number is greater than an exponent bit width of the input floating-point number.

15. The method according to claim 13 or 14, wherein the obtaining a first product result based on the output floating-point number, matching the first product result based on a first-precision floating-point number format, and outputting a first matching result comprises:

   obtaining the first product result based on the output floating-point number; and
   receiving a mode signal, matching the first product result based on the first-precision floating-point number format and based on the mode signal, and outputting the first matching result, wherein the mode signal is used to indicate precision of the input floating-point number.

16. The method according to any one of claims 13 to 15, wherein if a mantissa bit width of the input floating-point number is less than or equal to a mantissa bit width of the output floating-point number, a quantity of output floating-point numbers obtained through adjustment based on the input floating-point numbers is the same as a quantity of the input floating-point numbers, each input floating-point number one-to-one corresponds to each output floating-point number, and a value represented by each input floating-point number is the same as a value represented by an output floating-point number corresponding to the input floating-point number.

17. The method according to any one of claims 13 to 15, wherein if a mantissa bit width of the input floating-point number is greater than a mantissa bit width of the output floating-point number, a quantity of output floating-point numbers obtained through adjustment based on the input floating-point numbers is greater than a quantity of the input floating-point numbers, each input floating-point number corresponds to a plurality of output floating-point numbers, and a value represented by each input floating-point number is the same as a value represented by a sum of the plurality of output floating-point numbers corresponding to the input floating-point number.

18. The method according to claim 17, wherein a quantity of output floating-point numbers corresponding to each input floating-point number is determined based on a mantissa bit width of the input floating-point number and the mantissa bit width of the output floating-point number.

19. The method according to claim 17 or 18, wherein the adjustment step further comprises:

   splitting a mantissa of each input floating-point number into a plurality of mantissa segments, wherein a bit width of each mantissa segment is less than or equal to the mantissa bit width of the output floating-point number; and determining, based on the plurality of mantissa segments of each input floating-point number, the plurality of output floating-point numbers corresponding to each input floating-point number.

20. The method according to any one of claims 13 to 19, wherein a format of the input floating-point number satisfies the Institute of Electrical and Electronics Engineers IEEE binary floating point arithmetic standard, and a format of the output floating-point number does not satisfy the IEEE binary floating point arithmetic standard.

21. A computing device, comprising a memory and a processor, wherein

   the memory is configured to store a computer program; and
   when the processor runs the computer program in the memory, the processor performs the method according to any one of claims 13 to 20.

22. A computing device, comprising a processor and an arithmetic logic unit, wherein

   the processor is configured to: obtain an input floating-point number; perform adjustment based on the input floating-point number to obtain an output floating-point number, wherein the input floating-point number is a first-precision floating-point number, and the output floating-point number is a second-precision floating-point number; and input the output floating-point number into the arithmetic logic unit; and
   the arithmetic logic unit is configured to: obtain a first product result based on the output floating-point number, match the first product result based on a first-precision floating-point number format, and output a first matching result.

23. The computing device according to claim 22, wherein an exponent bit width of the output floating-point number is greater than an exponent bit width of the input floating-point number.

24. The computing device according to claim 22 or 23, wherein the arithmetic logic unit comprises at least one multiplier-accumulator, and precision corresponding to each multiplier-accumulator is the second precision.

25. The computing device according to any one of claims 21 to 24, wherein a format of the input floating-point number satisfies the Institute of Electrical and Electronics Engineers IEEE binary floating point arithmetic standard, and a format of the output floating-point number does not satisfy the IEEE binary floating point arithmetic standard.

| 1 bit | 8 bits | | 23 bits | |
| Sign | Exponent | | Mantissa | |

... ...

FIG. 1

Chip

Memory
module

← Instruction →

Controller

Instruction

Instruction

← Data →

Memory
(Cache)

← Data →

Computation unit

| ALU | ALU | ALU |
| ALU | ALU | ALU |

FIG. 2

FIG. 3

Floating-point number splitting and conversion subcircuit 311

First-precision floating-point number decomposition logic 3111

Sign

Exponent

Mantissa

Exponent adjustment logic 3112

Mantissa splitting or extension logic 3113

Second-precision floating-point combination logic 3114

Second-precision floating-point number

...

Second-precision floating-point number

First-precision floating-point number

Mode signal

FIG. 4

Adjustment circuit 31

**Floating-point number splitting and conversion subcircuit 311**

First-precision floating-point number → First-precision floating-point number splitting logic 3111

Mode signal →

Sign

Exponent → Exponent adjustment logic 3112

Mantissa → Mantissa splitting or extension logic 3113

→ Second-precision floating-point combination logic 3114

Second-precision floating-point number
⋮
Second-precision floating-point number

**Floating-point number splitting and conversion subcircuit 311**

First-precision floating-point number → First-precision floating-point number splitting logic 3111

Mode signal →

Sign

Exponent → Exponent adjustment logic 3112

Mantissa → Mantissa splitting or extension logic 3113

→ Second-precision floating-point combination logic 3114

Second-precision floating-point number
⋮
Second-precision floating-point number

Multiplicator combination subcircuit 312

→ Second-precision floating-point number combination

FIG. 5

Multiplier-accumulator 32

Multiplicator a

Multiplicator b

Accumulated number c

Mode signal

Operation subcircuit 321

Sign Exponent Mantissa

Format processing subcircuit 322

Second-precision floating-point number

FIG. 6

E

FP16 | 1 | 5 | 10 |

Zeros are added to the last three bits

E

FP26 | 1 | 12 | 13 | 0 | 0 | 0 |

FIG. 7

E

bfloat16 | 1 | 8 | 7 |

Zeros are added to the last six bits

E

FP26 | 1 | 12 | 13 | 0 | 0 | 0 | 0 | 0 | 0 |

FIG. 8

E

FP32 | 1 | 8 | 23 |

E

FP26 | 1 | 12 | 13 | 0 | 0 |

E–12

FP26 | 1 | 12 | 13 | 0 | 0 |

FIG. 9

FIG. 10

FIG. 11

Adjustment module — 1201

Matching module — 1202

FIG. 12

1300

Computing device

Processor — 1301

— 1302

Bus system

Memory — 1303

FIG. 13

<table>
<tr><td colspan="2">INTERNATIONAL SEARCH REPORT</td><td>International application No.<br>**PCT/CN2020/121536**</td></tr>
</table>

**A. CLASSIFICATION OF SUBJECT MATTER**

G06F 7/57(2006.01)i

According to International Patent Classification (IPC) or to both national classification and IPC

**B. FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNTXT; CNABS; CNKI; TWTXT; TWABS; USTXT; VEN; EPTXT; WOTXT: 芯片, 浮点, 算数逻辑单元, 乘法, 乘加器, 精度, 不同, chip, floating point, arithmetic logic unit, ALU, multiplication, sum of multiplication, precision, different

**C. DOCUMENTS CONSIDERED TO BE RELEVANT**

| Category* | Citation of document, with indication, where appropriate, of the relevant passages | Relevant to claim No. |
|---|---|---|
| A | CN 108958705 A (TIANJIN PHYTIUM TECHNOLOGY CO., LTD.) 07 December 2018 (2018-12-07)<br>description, paragraphs 3-9, figure 1 | 1-25 |
| A | CN 104246690 A (HUAWEI TECHNOLOGIES CO., LTD.) 24 December 2014 (2014-12-24)<br>description, paragraphs 5-6 | 1-25 |
| A | CN 110442323 A (FUDAN UNIVERSITY) 12 November 2019 (2019-11-12)<br>entire document | 1-25 |
| A | US 2019196786 A1 (INTEL CORPORATION) 27 June 2019 (2019-06-27)<br>entire document | 1-25 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **11 January 2021** | **18 January 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2020/121536**

| Patent document cited in search report | | | Publication date (day/month/year) | Patent family member(s) | | | Publication date (day/month/year) |
|---|---|---|---|---|---|---|---|
| CN | 108958705 | A | 07 December 2018 | None | | | |
| CN | 104246690 | A | 24 December 2014 | EP | 2828737 | A1 | 28 January 2015 |
| | | | | CN | 104246690 | B | 24 October 2017 |
| | | | | WO | 2013155744 | A1 | 24 October 2013 |
| | | | | JP | 5873599 | B2 | 01 March 2016 |
| | | | | IL | 235179 | A | 31 January 2019 |
| | | | | KR | 20150003338 | A | 08 January 2015 |
| | | | | US | 2013282778 | A1 | 24 October 2013 |
| | | | | JP | 2015518610 | A | 02 July 2015 |
| | | | | US | 9274750 | B2 | 01 March 2016 |
| | | | | KR | 101603471 | B1 | 14 March 2016 |
| | | | | IL | 235179 | A1 | 31 December 2014 |
| CN | 110442323 | A | 12 November 2019 | None | | | |
| US | 2019196786 | A1 | 27 June 2019 | US | 10521194 | B2 | 31 December 2019 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010066005X

- CN 202010245293